(19) **Europäisches Patentamt European Patent Office Office européen des brevets**

(11) **EP 4 742 110 A1**

(12) **EUROPEAN PATENT APPLICATION**

(43) Date of publication:
**13.05.2026 Bulletin 2026/20**

(21) Application number: **25213224.6**

(22) Date of filing: **04.11.2025**

(51) International Patent Classification (IPC):
**G06N 10/20** (2022.01)

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.11.2024 JP 2024196907**

(71) Applicant: **FUJITSU LIMITED**
**Kawasaki-shi, Kanagawa 211-8588 (JP)**

(72) Inventor: **KANASUGI, Shota**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) An information processing program for causing a computer to execute a process including: generating a plurality of first quantum circuits by a local compilation method, the first quantum circuits representing an action of a time evolution operator for a first time period and having a depth smaller than a depth of a first target quantum circuit representing the action of the time evolution operator for the first time period; and generating a second quantum circuit by the local compilation method, the second quantum circuit being smaller in depth than a second target quantum circuit obtained by combining two or more of the generated first quantum circuits and representing the action of the time evolution operator for a second time period longer than the first time period, the second quantum circuit representing the action of the time evolution operator for the second time period.

# FIG.1

**Description**

FIELD

The embodiments discussed herein are related to an information processing program, an information processing method, and an information processing device.

BACKGROUND

Conventionally, when a quantum many-body system simulation is performed in the field of material development, drug discovery research, or the like, a quantum circuit expressing the action of a time evolution operator is generated. Here, in order to maintain the accuracy of the quantum chemical calculation in the quantum many-body system simulation, it is desirable to reduce the number of operations in the quantum circuit. For example, when the number of operations in the quantum circuit is large due to the large number of quantum gates, errors occurring in the qubit due to environmental noise, interference of other qubits, noise during operation of the qubit, and the like may be cumulative for each quantum gate.

One prior art includes, for example, locally rendering non-local quantum dynamics. Further, for example, there is a technique for realizing an effect of imaginary time evolution by real time unitary evolution related to a Hamiltonian of a system. In addition, for example, there is a technique of implementing a real-time evolution unitary of a Hamiltonian. In addition, for example, there is a technique of encoding a calculation problem into a problem Hamiltonian. For example, refer to Published Japanese-Translation of PCT Application, Publication No. 2022-538721, Published Japanese-Translation of PCT Application, Publication No. 2023-535109, U.S. Patent Application Publication No. 2020/0143280, and U.S. Patent Application Publication No. 2022/0207402.

SUMMARY

It is an object in one aspect of the embodiments to at least solve the above problems in the conventional technologies.

According to an aspect of an embodiment, an information processing program for causing a computer to execute a process including: generating a plurality of first quantum circuits by a local compilation method, the first quantum circuits representing an action of a time evolution operator for a first time period and having a depth smaller than a depth of a first target quantum circuit representing the action of the time evolution operator for the first time period; and generating a second quantum circuit by the local compilation method, the second quantum circuit being smaller in depth than a second target quantum circuit obtained by combining two or more of the generated first quantum circuits and representing the action of the time evolution operator for a second time period longer than the first time period, the second quantum circuit representing the action of the time evolution operator for the second time period.

BRIEF DESCRIPTION OF DRAWINGS

Fig. 1 is an explanatory diagram depicting an example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a hardware configuration of a computing device 201.
Fig. 5 is a block diagram depicting an example of a functional configuration of the information processing device 100.
Fig. 6 is an explanatory diagram depicting an example in which an ETS method is used.
Fig. 7 is an explanatory diagram depicting an example in which the ETS method is used.
Fig. 8 is an explanatory diagram depicting an example in which the ETS method is used.
Fig. 9 is an explanatory diagram depicting an example of setting a compile size $L\sim\_j$.
Fig. 10 is an explanatory diagram depicting an example of performing a quantum many-body system simulation for a long time.
Fig. 11 is an explanatory diagram depicting an example in which a BTS method is used.
Fig. 12 is an explanatory diagram depicting an example in which the BTS method is used.
Fig. 13 is an explanatory diagram depicting an example in which the BTS method is used.
Fig. 14 is an explanatory diagram depicting an example of effects in a case of using the ETS method and a case of using the BTS method.
Fig. 15 is an explanatory diagram depicting an example of effects in a case of using the ETS method and a case of using the BTS method.

Fig. 16 is an explanatory diagram depicting a first embodiment of the information processing device 100.

Fig. 17 is an explanatory diagram depicting an example of verification of accuracy when the ETS method in the first embodiment is used.

Fig. 18 is an explanatory diagram depicting an example of verification of accuracy when the ETS method in the first embodiment is used.

Fig. 19 is an explanatory diagram depicting an example of verification of accuracy when the BTS method is used in the first embodiment.

Fig. 20 is an explanatory diagram depicting an example of verification of accuracy when the BTS method is used in the first embodiment.

Fig. 21 is an explanatory diagram depicting an example in which a depth of a variational quantum circuit is verified.

Fig. 22 is an explanatory diagram depicting a second embodiment of the information processing device 100.

Fig. 23 is an explanatory diagram depicting an example of another method for comparison with ML-LVQC.

Fig. 24 is an explanatory diagram depicting an example of cost verification in the second embodiment.

Fig. 25 is an explanatory diagram depicting an example of cost verification in the second embodiment.

Fig. 26 and 27 is an explanatory diagram depicting an example of verification of accuracy when the ETS method is used in the second embodiment.

Fig. 28 is a flowchart depicting an example of a procedure of a first generation process.

Fig. 29 is a flowchart depicting an example of a procedure of a first calculation process.

Fig. 30 is a flowchart depicting an example of a procedure of a second generation process.

Fig. 31 is a flowchart depicting an example of the procedure of a second calculation process.

DESCRIPTION OF EMBODIMENTS

First, problems associated with the conventional techniques are discussed. In the related art, it is difficult to generate a quantum circuit that expresses the action of the time evolution operator so as to reduce the number of operations. For example, when a quantum circuit that accurately expresses the action of a time evolution operator is generated by the Trotter decomposition method, the scale, depth, or the like of the quantum circuit tends to increase, and the quantum circuit may not be generated so as to reduce the number of operations. The scale is, for example, the number of quantum gates. The depth is, for example, the number of groups of parallelizable quantum gates.

Embodiments of a computer-readable recording medium storing therein an information processing program, an information processing method, and an information processing device according to the present invention are explained below in detail with reference to the accompanying drawings.

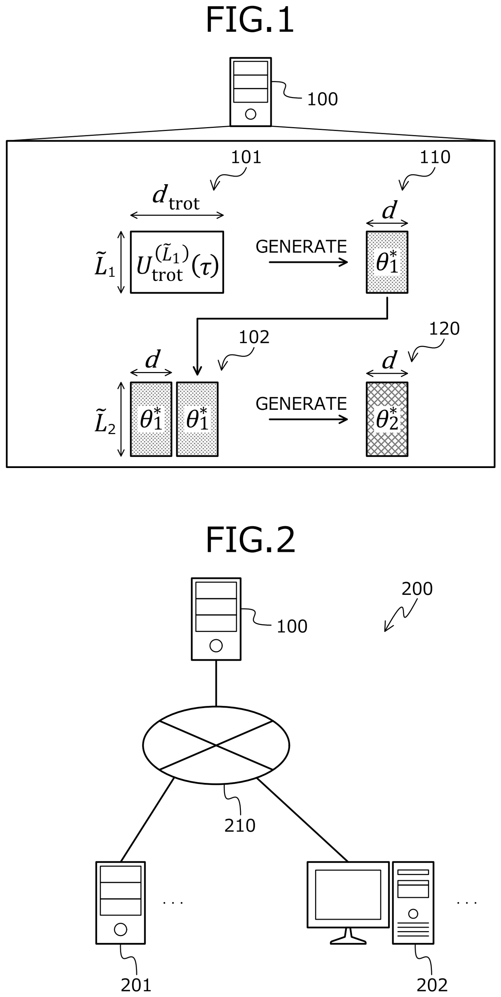

Fig. 1 is an explanatory diagram depicting an example of an information processing method according to an embodiment. The information processing device 100 is a computer for generating a quantum circuit expressing an action of a time evolution operator. The information processing device 100 is, for example, a server or a personal computer (PC).

In the following description, for convenience, a specific character may be denoted as "(specific character) _(subscript)" when a subscript is appended to a specific character. For convenience, when a superscript is appended to a specific character, the specific character may be expressed as "(specific character)_(superscript)". Further, for the sake convenience, when "~" is added directly above a specific character, the specific character may be expressed as "(specific character)~".

Conventionally, it is desirable to perform quantum many-body system simulation in the field of material development, drug discovery research, or the like. A quantum many-body system is a physical system that includes multiple quantum mechanical particles. A quantum many-body system is, for example, a molecule or a solid crystal. The amount of memory used when quantum many-body system simulation is performed increases exponentially with respect to the size of the physical system. For this reason, quantum many-body system simulation is preferably performed by an actual quantum computer.

Here, when quantum many-body system simulation is performed, it is desirable to generate a quantum circuit that expresses the action of the time evolution operator. The time evolution operator simulates a temporal change of the quantum state at a predetermined time. For example, a temporal change in a quantum state in a quantum many-body system of a size L described by a Hamiltonian $H^{(L)}$ is defined by the following expression (1) using a time evolution operator $\exp(-i\tau H^{(L)})$.

$$|\psi(\tau)\rangle = \exp(-i\tau H^{(L)}) \, |\psi_0\rangle \quad \dots (1)$$

Here, in order to maintain the accuracy of specific calculation processing such as quantum chemical calculation or material physical property calculation in quantum many-body system simulation, it is desirable to reduce the number of operations in a quantum circuit expressing the action of a time evolution operator. The operation is, for example, an operation on a qubit. For example, the number of operations in a quantum circuit depends on the scale or depth of the quantum circuit. The scale is, for example, the number of quantum gates forming the quantum circuit. The depth is, for example, the number of groups of parallelizable quantum gates.

For example, since the scale of the quantum circuit is large and the number of quantum gates is large, the number of operations in the quantum circuit increases, errors occurring in qubits a cumulative in each quantum gate, and the accuracy of specific calculation processing cannot be maintained in some cases. The error is caused by environmental noise, interference of other qubits, noise during operation of the qubits, and the like. Further, for example, when the number of operations in the quantum circuit is large because the depth of the quantum circuit is large, the calculation time in the quantum circuit becomes long, the limitation of the coherence time cannot be satisfied, and the accuracy of specific calculation processing cannot be maintained in some cases. The coherence time represents a time limit during which the quantum quality in the qubit may be maintained.

As described above, as the number of operations in the quantum circuit increases, it becomes more difficult to maintain the accuracy of the specific calculation processing. Therefore, it is desirable to reduce the number of operations in the quantum circuit and easily maintain the accuracy of the specific calculation processing. In other words, it is desirable to reduce the scale, depth, or the like of a quantum circuit that expresses the action of a time evolution operator.

In particular, in a quantum computer having a scale of several hundreds of qubits, it is difficult to correct an error occurring in a qubit. Therefore, it is desirable to reduce the number of operations in a quantum circuit and easily maintain the accuracy of specific calculation processing. The quantum computer having a scale of several hundreds of qubits is a Noisy Intermediate Scale Quantum Computer (NISQ), an Early- Fault-Tolerant Quantum Computer (FTQC), or the like.

However, in the related art, it is difficult to generate a quantum circuit that expresses the action of the time evolution operator so as to reduce the number of operations. For example, there is a technique called Trotter decomposition that generates a quantum circuit representing the action of a time evolution operator. For example, when a quantum circuit that accurately expresses the action of the time evolution operator is generated by the Trotter decomposition method, the scale or depth of the quantum circuit tends to increase. For this reason, for example, there is a case where it is not possible to generate a quantum circuit that accurately expresses the action of the time evolution operator so as to reduce the number of operations by the Trotter decomposition method.

In addition, for example, there is a method called local compilation for generating a quantum circuit expressing an action of a time evolution operator. The local compilation method is, for example, Local Variational Quantum Compilation (LVQCn) or Local Subspace Variational Quantum Compilation (LSVQC). For example, for LVQC, refer to Mizuta, Kaoru, et al. "Local variational quantum compilation of large-scale Hamiltonian dynamics." PRX Quantum 3.4 (2022): 040302. In addition, for example, refer to Kanasugi, Shota, et al. "Subspace-Based Local Compilation of Variational Quantum Circuits for Large-Scale Quantum Many-Body Simulation." arXiv preprint arXiv:2407.14163 (2024) for LSVQC.

For example, in the local compilation method, a quantum circuit expressing the action of the time evolution operator is generated for a partial many-body system of a size L~ smaller than the size L in the quantum many-body system of the size L, and is applied to the quantum many-body system of the size L. Specifically, the quantum circuit V(θ) representing the action of the time evolution operator is generated by minimizing a cost function representing a difference between the quantum circuit U representing the action of the time evolution operator and the quantum circuit V(θ) having a relatively small scale. U is obtained by, for example, a method of Trotter decomposition. The cost function is defined by, for example, the following expression (2). U is defined by, for example, the following expression (3). When the value of the cost function is 0, the following expression (4) is established.

$$C^{(\tilde{L})}(\theta) = 1 - \frac{1}{4^{\tilde{L}}} \left| Tr\left[ \left( V^{(\tilde{L})}(\theta) \right)^{\dagger} U^{(\tilde{L})} \right] \right|^2 \quad \dots (2)$$

$$U = \exp(-i\tau H) \quad \dots (3)$$

$$U^{(\tilde{L})} = e^{i\phi} V^{(\tilde{L})}(\theta) \quad \dots (4)$$

Specifically, θ is optimized to θ~* * by minimizing a cost function representing a difference between a Trotter circuit $U^{(\tilde{L})}$_trot having the size L~ and a depth d_trot and $V^{(\tilde{L})}(\theta)$ having the size L~ and the depth d. The depth d_trot tends to increase as the accuracy with which the trotter circuit $U^{(\tilde{L})}$_trot expresses the action of the time evolution operator increases. $U^{(\tilde{L})}$_trot is defined by the following expression (5). $V^{(\tilde{L})}(\theta^*)$ is defined by the following expression (6). d<d_trot is satisfied. The optimized θ^* is defined by the following expression (7).

$$U_{\text{trot}}^{(\tilde{L})} \approx \exp(-i\tau H^{(\tilde{L})}) \quad ...(5)$$

$$V^{(\tilde{L})}(\theta^*) \approx U_{\text{trot}}^{(\tilde{L})} \approx \exp(-i\tau H^{(\tilde{L})}) \quad ...(6)$$

$$\theta^* = \text{argmin}_\theta C^{(\tilde{L})}(\theta) \quad ...(7)$$

The local compilation method is effective for $\tau$ in the short time domain corresponding to the range of $L \geq \tilde{L}$ according to the following expression (8), but is not effective for $\tau$ equal to or greater than $\tau$_max corresponding to $L=\tilde{L}$ and the quantum circuit $V(\theta)$ cannot be generated. $v\_(LR)$ is the Lieb-Robinson rate. $\tilde{L}\_0$ is a constant. $\tilde{L}\_0$ depends on the depth of the quantum circuit and the Hamiltonian.

$$\tilde{L} = v_{LR}\tau + \tilde{L}_0 \quad ...(8)$$

On the other hand, in practical applications such as quantum chemical calculation or material physical property calculation, it may be desirable to simulate a temporal change of a quantum state in $N\tau$ for a relatively long time. For example, $N\tau > \tau$_max. However, as described above, the local compilation method is not effective for $N\tau > \tau$_max, and a quantum circuit $V(\theta)$ for $N\tau$ cannot be generated.

Here, as depicted in the following expression (9), the action of the time evolution operator with respect to $N\tau$ corresponds to applying the time evolution operator repeatedly N times with respect to the short time domain $\tau$; the time evolution operator may be generated by the local compilation method, to repeatedly act. Therefore, in order to simulate the temporal change of the quantum state at $N\tau$ for a relatively long time, $V(\theta^*)$ defined by the following expression (10) is repeatedly applied N times.

$$\exp(-iN\tau H) = (\exp(-i\tau H))^N$$

$$\approx \left(V(\theta^*)\right)^N \quad ...(9)$$

$$V(\theta^*) \approx \exp(-i\tau H) \quad ...(10)$$

Therefore, when simulating the temporal change of the quantum state at $N\tau$ for a relatively long time, the number of quantum gates/the depth of the quantum circuit is O(N). In addition, the processing time necessary for simulating the temporal change of the quantum state in $N\tau$ of a relatively long time is $O(N^2)$. As described, as $N\tau$ increases, the number of quantum gates/the depth of the quantum circuit increases, and the processing time necessary to simulate the temporal change of the quantum state at $N\tau$ increases.

Therefore, in the present embodiment, an information processing method capable of generating a quantum circuit expressing the action of a time evolution operator so as to reduce the number of operations is described. According to this information processing method, specifically, it is possible to generate a quantum circuit expressing the action of the time evolution operator so that the scale or depth of the quantum circuit is reduced.

In Fig. 1, the information processing device 100 stores a first time period. The first time period is, for example, $\tau$. The first time period is included in, for example, the above-described short time domain. The information processing device 100 stores a rule specifying a second time period longer than the first time period. The second time period is, for example, a multiple of the first time period. Specifically, the second time period is twice the first time period and is $2\tau$. The information processing device 100 may store the second time period.

(1-1) The information processing device 100 obtains the quantum circuit 101 expressing the action of the time evolution operator for the first time period. The information processing device 100 generates and obtains the quantum circuit 101 by, for example, a Trotter decomposition method. For example, the information processing device 100 may obtain the quantum circuit 101 by receiving the quantum circuit 101 from another computer. For example, the information processing device 100 may generate and obtain the quantum circuit 101 by a method other than the Trotter decomposition method. Specifically, the information processing device 100 obtains $U^{(\tilde{L}\_1)}\_{trot}$ constituting the quantum circuit 101 expressing the action of the time evolution operator for the first time period $\tau$. The depth of $U^{(\tilde{L}\_1)}\_{trot}$ is d_trot.

(1-2) The information processing device 100 sets the quantum circuit 101 as a first target, and generates the first quantum circuit 110 that expresses the action of the time evolution operator for the first time period and has a smaller depth than the quantum circuit 101 set as the first target by the local compilation method. The first quantum circuit 110 has parameters. For example, the information processing device 100 prepares the first quantum circuit 110 in which parameters are initialized. For example, the information processing device 100 generates the first quantum circuit 110 expressing the action of the time evolution operator for the first time period by updating the parameters of the first quantum circuit 110 so as to minimize the value of the cost function representing the difference between the quantum circuit 101 and the first quantum circuit 110. Specifically, the information processing device 100 prepares $V^{\wedge}(L\sim\_1)(\theta\_1)$ to be the first quantum circuit 110. Specifically, the information processing device 100 updates the parameter $\theta\_1$ to $\theta^{\wedge*}\_1$ so as to minimize the value of the cost function, thereby generating $V^{\wedge}(L\sim\_1)(\theta^{\wedge*}\_1)$ serving as the first quantum circuit 110 expressing the action of the time evolution operator for the first time period $\tau$. The depth of $V^{\wedge}(L\sim\_1)(\theta^{\wedge*}\_1)$ is d less than d\_trot.

(1-3) The information processing device 100 combines two or more of the generated first quantum circuits 110 to obtain a quantum circuit 102 expressing an action of a time evolution operator for a second time period longer than the first time period. The second time period is, for example, $2\tau$. Specifically, the information processing device 100 generates $V^{\wedge}(L\sim\_2)(\theta^{\wedge*}\_1)$ obtained by expanding $V^{\wedge}(L\sim\_1)(\theta^{\wedge*}\_1)$ to the size $L\sim\_2$ based on the parameter $\theta^{\wedge*}\_1$. Specifically, the information processing device 100 obtains $(V^{\wedge}(L\sim\_1)(\theta^{\wedge*}\_1))^{\wedge}2$, which is the quantum circuit 102 expressing the action of the time evolution operator for the second time period $2\tau$, by concatenating the two generated $V^{\wedge}(L\sim\_2)(\theta^{\wedge*}\_1)$.

(1-4) The information processing device 100 sets the quantum circuit 102 as a second target and generates the second quantum circuit 120 that expresses the action of the time evolution operator for the second time period and has a depth smaller than that of the quantum circuit 102 set as the second target by the local compilation method. The second quantum circuit 120 has parameters. For example, the information processing device 100 prepares the second quantum circuit 120 in which the parameters are initialized. For example, the information processing device 100 updates the parameters of the second quantum circuit 120 so as to minimize the value of the cost function representing the difference between the quantum circuit 102 and the second quantum circuit 120, thereby generating the second quantum circuit 120 expressing the action of the time evolution operator for the second time period. Specifically, the information processing device 100 prepares $V^{\wedge}(L\sim\_2)(\theta\_2)$ to be the second quantum circuit 120. Specifically, the information processing device 100 updates the parameter $\theta\_2$ to $\theta^{\wedge*}\_2$ so as to minimize the value of the cost function, thereby generating $V^{\wedge}(L\sim\_1)\_2)(\theta^{\wedge*}\_2)$ serving as the second quantum circuit 120 expressing the action of the time evolution operator for the second time period $2\tau$. The depth of $V^{\wedge}(L\sim\_2)(\theta^{\wedge*}\_2)$ is d less than d\_trot.

Accordingly, the information processing device 100 may generate a quantum circuit that expresses the action of the time evolution operator so that the number of operations is reduced. The information processing device 100 may suppress the scale, depth, or the like of the quantum circuit and may reduce the number of operations, for example, as compared with the method of Trotter decomposition. Specifically, the information processing device 100 may generate $V^{\wedge}(L\sim\_1)\_1)(\theta^{\wedge*}\_1)$ that becomes the first quantum circuit 110 with the depth suppressed to d. Specifically, the information processing device 100 may generate $V^{\wedge}(L\sim\_1)\_2)(\theta^{\wedge*}\_2)$ that becomes the second quantum circuit 120 with the depth suppressed to d.

Therefore, for example, the information processing device 100 may efficiently and easily perform the quantum many-body system simulation. For example, the information processing device 100 may reduce the number of operations in the quantum circuit expressing the action of the time evolution operator and may maintain the accuracy of specific calculation processing such as quantum chemical calculation or material physical property calculation in the quantum many-body system simulation.

In addition, for example, when it is desirable to simulate a temporal change of a quantum state in $N\tau$ of a relatively long time, the information processing device 100 may make it possible to utilize the second quantum circuit 120 expressing an action of a time evolution operator for a second time period $2\tau$ longer than $\tau$. Specifically, by applying the second quantum circuit 120 N/2 times, the information processing device 100 may simulate the temporal change of the quantum state for $N\tau$ of a relatively long time.

Therefore, the information processing device 100 may reduce the number of quantum gates/the depth of the quantum circuit as compared with, for example, a case where a quantum circuit expressing the action of the time evolution operator for $\tau$ is repeatedly applied N times to simulate the temporal change of the quantum state in $N\tau$ of a relatively long time. Similarly, for example, the information processing device 100 may reduce the processing time necessary for simulating the temporal change of the quantum state in $N\tau$ of a relatively long time.

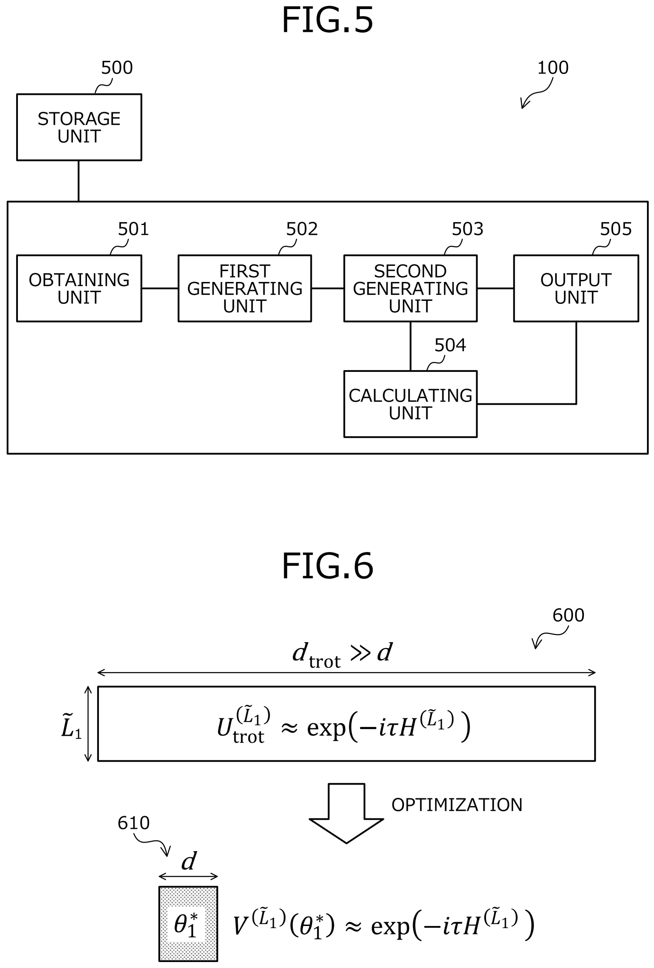

Here, while case where the information processing device 100 generates one second quantum circuit 120 has been described, the present disclosure is not limited hereto. For example, the information processing device 100 may further perform, a predetermined number of times, a process of newly generating a second quantum circuit 120 representing an action of a time evolution operator for a time longer than that of the second quantum circuit 120 generated immediately before. A specific example in this case is described later with reference to Figs. 5 to 9.

Here, while a case has been described in which the information processing device 100 generates and then combines the second quantum circuit 120 having the size $L\sim\_2$ based on expanding the first quantum circuit 110 having a size $L\sim\_1$ to a size $L\sim\_2$, the present disclosure is not limited hereto. For example, the information processing device 100 may generate the second quantum circuit 120 having the size $L\sim\_2$ based on generating and combining the first quantum circuit 110 having the size $L\sim\_2$. Specifically, the information processing device 100 generates the quantum circuit 101 having the size L~_2 and generates the first quantum circuit 110 having the size L~_2 by the Trotter decomposition method.

Here, while a case where functions as the information processing device 100 are realized by a single computer has been described, the present disclosure is not limited hereto. For example, a function of the information processing device 100 may be realized by cooperation of multiple computers. For example, functions of the information processing device 100 may be implemented on a cloud.

In the following description, a method of generating a quantum circuit expressing an action of a time evolution operator by the information processing device 100 may be referred to as "multi-level local compilation".

Next, an example of an information processing system 200 to which the information processing device 100 depicted in Fig. 1 is applied is described with reference to Fig. 2.

Fig. 2 is an explanatory diagram depicting an example of the information processing system 200. In Fig. 2, the information processing system 200 includes the information processing device 100, a computing device 201, and one or more client devices 202.

In the information processing system 200, the information processing device 100 and the computing device 201 are coupled via a wired or wireless network 210. The network 210 is, for example, a local area network (LAN), a wide area network (WAN), the Internet, or the like. In the information processing system 200, the information processing device 100 and the client device 202 are coupled via a wired or wireless network 210.

The information processing device 100 is a computer for generating a quantum circuit expressing an action of a time evolution operator so as to reduce the number of operations. The information processing device 100 obtains, for example, a processing request requesting to solve a target problem. Targeted problems include, for example, performing certain computational processes, such as quantum chemistry calculations or material property calculations in relatively long term quantum many-body system simulations. The processing request includes, for example, information concerning the target problem. The processing request includes, for example, a definition of multiple qubits for representing a quantum state.

Specifically, the information processing device 100 obtains the processing request by receiving the processing request from another computer. The other computer is, for example, the client device 202. Specifically, the information processing device 100 obtains the processing request by receiving an input of the processing request based on an operational input of the user. In response to the processing request, the information processing device 100 generates a quantum circuit that expresses an action of a time evolution operator to be used when solving a target problem so that the number of operations is small and the number of quantum gates is small.

For example, as depicted in the following (2-1) and (2-2), the information processing device 100 generates K quantum circuits $V^{(L\sim\_1)}\_j)(\theta^*\_j)$ representing actions of time evolution operators for different times in a range of $\tau$ or more but not more than $N\tau$. Here, j=1, 2, ..., K. Each of the K quantum circuits has the depth d. d is smaller than the depth d_trot of a quantum circuit of the size L~_1 representing the action of a time evolution operator of $\tau$ minutes, for example by Trotter decomposition.

(2-1) For example, for j=1, the information processing device 100 generates a quantum circuit $V^{(L\sim\_1)}(\theta^{*}\_1)$ having the depth d and representing the action of the time evolution operator for $\tau$ minutes. Specifically, the information processing device 100 obtains a quantum circuit having the size L~_1 and the depth d_trot, which expresses an action of a time evolution operator for $\tau$ minutes by the Trotter decomposition method, and sets the quantum circuit as a target circuit. Specifically, the information processing device 100 prepares a quantum circuit $V^{(L\sim\_1)}(\theta\_1)$ having the size L~_1 and the depth d. Specifically, the information processing device 100 updates $\theta\_1$ to $\theta^{*}\_1$ so as to minimize the value of the cost function representing the difference between the set target circuit and the prepared quantum circuit $V^{(L\sim\_1)}(\theta\_1)$. As a result, the information processing device 100 generates a quantum circuit $V^{(L\sim\_1)}(\theta^{*}\_1)$ expressing the action of the time evolution operator for $\tau$ minutes.

(2-2) For example, the information processing device 100 generates a quantum circuit $V^{(L\sim\_j)}(\theta^{*}\_j)$ having the depth d that expresses an action of a time evolution operator for $j\tau$ or $(2^{(j-1)}) \tau$ sequentially for each of j=2, 3, and ...K. Specifically, the information processing device 100 prepares a quantum circuit having a depth larger than d and representing the action of the time evolution operator for $j\tau$ or $(2^{(j-1)}) \tau$ based on the generated quantum circuit, and sets the quantum circuit as the target circuit. Specifically, the information processing device 100 prepares a quantum circuit $V^{(L\sim\_j)}(\theta\_j)$ having the size L~_j and the depth d. Specifically, the information processing device 100 updates $\theta\_j$ to $\theta^{*}\_j$ so as to minimize the value of the cost function representing the difference between the set target circuit and the prepared quantum circuit $V^{(L\sim\_j)}(\theta\_j)$. As a result, the information processing device 100 generates a quantum circuit $V^{(L\sim\_j)}(\theta^{*}\_j)$ expressing the action of the time evolution operator for $j\tau$ or $(2^{(j-1)})\tau$.

The information processing device 100 cooperates with the computing device 201 to execute specific calculation processing in order to solve a target problem by using K quantum circuits expressing an action of a time evolution operator. For example, the information processing device 100 controls the computing device 201 to share all or a part of specific calculation processing. Specifically, the information processing device 100 controls the computing device 201 to share quantum computation in specific computation processing. Accordingly, the information processing device 100 may cooperate with the computing device 201 to execute specific computation processing and solve a target problem.

The information processing device 100 outputs a result of solving the target problem. The information processing device 100 transmits, for example, the result of solving the target problem to another computer. The other computer is, for example, the client device 202. For example, the information processing device 100 may output the result of solving the target question so that the user may refer to the result. Accordingly, the information processing device 100 may make the result of solving the target problem available externally. The information processing device 100 is, for example, a server or a PC.

The computing device 201 is a computer for executing quantum computation. The computing device 201 shares all or a part of specific calculation processing under the control of the information processing device 100. The computing device 201 may be, for example, a classical computer that activates a quantum simulator. In this case, the computing device 201 is, for example, a server or a PC. The computing device 201 may be, for example, an actual quantum computer.

The client device 202 is a computer utilized by a user who desires to perform a particular computational process. The client device 202 generates a processing request requesting to solve a target problem, based on an operational input of the user, and transmits the processing request to the information processing device 100. The client device 202 receives a result of solving the target problem from the information processing device 100. The client device 202 outputs the result of solving the target problem so that the user may refer to the result. The client device 202 is, for example, a PC, a tablet terminal, or a smartphone.

Here, while a case where the information processing device 100 and the computing device 201 are different devices has been described, the present disclosure is not limited hereto. For example, the information processing device 100 may have a function of the computing device 201 and may also operate as the computing device 201. Further, although a case where the information processing device 100 and the client device 202 are different devices has been described, the present disclosure is not limited hereto. For example, the information processing device 100 may have a function of the client device 202 and may also operate as the client device 202.

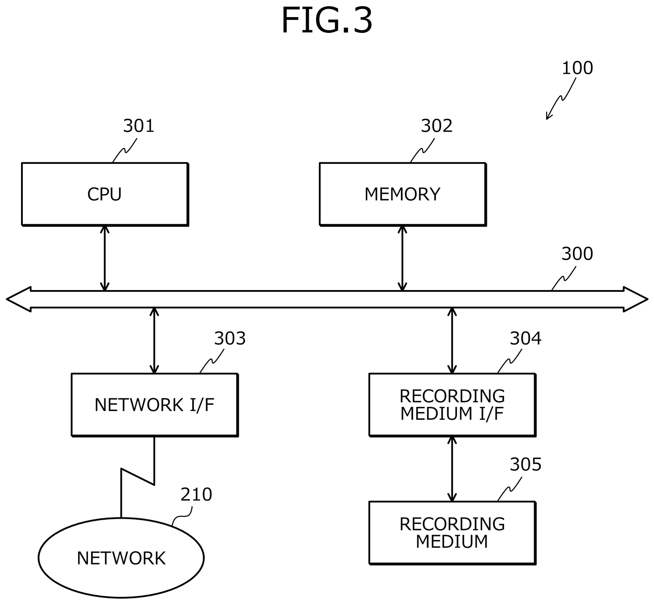

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

In an instance in which the computing device 201 is a classical computer that starts the quantum simulator, an example of a hardware configuration of the computing device 201, for example, is a same as the example of the hardware configuration of the information processing device 100 depicted in Fig. 3 and thus, description thereof is omitted herein.

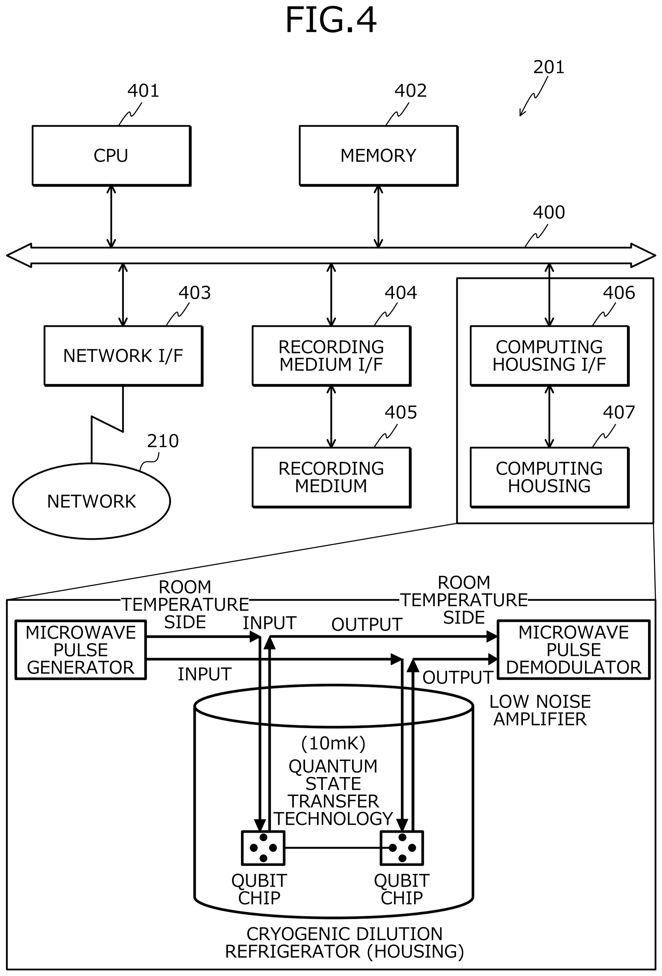

On the other hand, an instance in which the computing device 201 is an actual quantum computer is conceivable. Here, with reference to Fig. 4, an example a hardware configuration of the computing device 201 in an instance in which the computing device 201 is an actual quantum computer is described.

Fig. 4 is a block diagram depicting an example of a hardware configuration of the computing device 201. In Fig. 4, the computing device 201 has a CPU 401, a memory 402, a network I/F 403, a recording medium I/F 404, and a recording medium 405. The computing device 201 further has a computing housing I/F 406 and a computing housing 407. Further, the components are coupled by a bus 400.

Here, the CPU 401 governs overall control of the computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the computing device 201.

The computing housing I/F 406 controls access to the computing housing 407 under the control of the CPU 401. The computing housing I/F 406 converts signals output from the CPU 401 into input signals for the computing housing 407 using a microwave pulse generator and transmits the converted signals to the computing housing 407. The computing housing I/F 406 converts the signals output from the computing housing 407 into input signals for the CPU 401 using a microwave pulse demodulator and transmits the converted signals to the CPU 401. The computing housing 407 is a computing device equipped with one or more qubit chips cooled to an extremely low temperature of 10 mK. Each qubit chip represents, for example, a logical qubit. The computing housing 407 performs a predetermined computation according to an input signal using one or more qubit chips, and outputs an output signal corresponding to the result of performing the predetermined computation.

In addition to the components above, the computing device 201 may have, for example, a keyboard, a mouse, a display, a printer, a scanner, a microphone, a speaker, etc. The computing device 201 may also have the recording medium I/F 404 and recording medium 405 in plural. Further, in the computing device 201, the recording medium I/F 404 and the recording medium 405 may be omitted. Further, the qubit chip in the computing housing 407 may be controlled by a method other than microwaves. The qubit chip in the computing housing 407 may implement, for example, optical qubits.

An example of a hardware configuration example of the client device 202 is, for example, similar to the example of the hardware configuration of the information processing device 100 depicted in Fig. 3 and thus, description thereof is omitted.

Next, an example of a functional configuration of the information processing device 100 is described with reference to Fig. 5.

Fig. 5 is a block diagram depicting an example of a functional configuration of the information processing device 100. The information processing device 100 includes a storage unit 500, an obtaining unit 501, a first generating unit 502, a second generating unit 503, a calculating unit 504, and an output unit 505.

The storage unit 500 is implemented by, for example, a storage area such as the memory 302 or the recording medium 305 depicted in Fig. 3. Hereinafter, while a case where the storage unit 500 is included in the information processing device 100 is described, the present disclosure is not limited hereto. For example, the storage unit 500 may be included in a device different from the information processing device 100, and the storage content of the storage unit 500 may be referable from the information processing device 100.

The obtaining unit 501 to the output unit 505 function as an example of a controller. Specifically, functions of the obtaining unit 501 to the output unit 505 are realized, for example, by causing the CPU 301 to execute a program stored in a storage area such as the memory 302 or the recording medium 305 depicted in Fig. 3 or by the network I/F 303. Processing results of the functional units are stored to, for example, a storage area such as the memory 302 or the recording medium 305 depicted in Fig. 3.

The storage unit 500 stores various types of information referred to or updated in the processes by the functional units. The storage unit 500 stores, for example, an algorithm for implementing the Trotter decomposition method. The storage unit 500 stores, for example, an algorithm for implementing a local compilation method. The storage unit 500 stores, for example, a mathematical expression that represents a local compilation theorem and enables identification of a short time domain in which a local compilation method is effective. The mathematical expression is defined by, for example, the above expression (8).

The storage unit 500 stores, for example, multiple quantum circuits each representing an action of a time evolution operator for a predetermined time included in a short time domain, a quantum circuit being a target circuit in a local compilation method. Specifically, the storage unit 500 stores the structure of a quantum circuit and the parameters of the quantum circuit. The quantum circuit as the target circuit is generated by, for example, the first generating unit 502. The quantum circuit as the target circuit is generated by, for example, the second generating unit 503.

The storage unit 500 stores, for example, multiple quantum circuits that are generated by a local compilation method and each represents an action of a time evolution operator for a predetermined time included in a short time domain. Specifically, the storage unit 500 stores the structure of the quantum circuit and the parameters of the quantum circuit. The quantum circuit is generated by, for example, the first generating unit 502 using a local compilation method. The quantum circuit is generated by, for example, the second generating unit 503 using a local compilation method.

The obtaining unit 501 obtains various types of information used for the processes by the functional units. The obtaining unit 501 stores the obtained various types of information to the storage unit 500 or outputs the obtained various types of information to the functional units. The obtaining unit 501 may output various types of information stored in the storage unit 500 to the functional units. The obtaining unit 501 obtains various types of information based on, for example, an operational input of a user. For example, the obtaining unit 501 may receive various types of information from a device different from the information processing device 100.

The obtaining unit 501 obtains, for example, a processing request requesting to solve a target problem. Targeted problems include, for example, performing certain computational processes, such as quantum chemistry calculations or material property calculations in relatively long term quantum many-body system simulations. The processing request includes, for example, information concerning the target problem. The processing request includes, for example, a definition of a plurality of qubits for representing a quantum state. Specifically, the obtaining unit 501 obtains the processing request by receiving an input of the processing request. Specifically, the obtaining unit 501 may obtain the processing request by receiving the processing request from another computer. The other computer is, for example, the client device 202.

The obtaining unit 501 may receive a start trigger for starting the process of any of the functional units. The start trigger is, for example, a predetermined operational input by the user. The start trigger may be, for example, reception of predetermined information from another computer. The start trigger may be, for example, output of predetermined information by any of the functional units. For example, the obtaining unit 501 regards obtaining the processing request as a start trigger for starting the processes by the first generating unit 502, the second generating unit 503, and the calculating unit 504.

The first generating unit 502 sets a first target circuit to be used for the local compilation method. The first generating unit 502 sets, for example, a quantum circuit expressing the action of the time evolution operator for the first time period as the first target circuit. The first time period is, for example, $\tau$. Specifically, the first generating unit 502 generates a quantum circuit expressing the action of the time evolution operator for the first time period $\tau$ by the Trotter decomposition method, and sets the quantum circuit as the first target circuit. The first target circuit has, for example, the size $L\text{\textasciitilde}\_1$ and the depth $d\_trot$. The size $L\text{\textasciitilde}\_1$ is less than the size $L$ defining the targeted problem. Accordingly, the first generating unit 502 may prepare the local compilation method to be executable.

The first generating unit 502 generates, based on the set first target circuit, a first quantum circuit that expresses the action of the time evolution operator for the first time period and has a smaller depth than the quantum circuit set as the first target circuit by a local compilation method. For example, the first generating unit 502 sets a first quantum circuit having a depth smaller than that of the quantum circuit set as the first target circuit. The first quantum circuit has, for example, the size $L\text{\textasciitilde}\_1$ and the depth $d$. The depth $d$ is less than the depth $d\_trot$. For example, the first generating unit 502 updates the parameters of the first quantum circuit so as to minimize the value of the cost function representing the difference between the set first target circuit and the set first quantum circuit, thereby generating the first quantum circuit representing the action of the time evolution operator for the first time period. As a result, the first generating unit 502 may prepare the first quantum circuit whose depth is suppressed to $d$, and may reduce the cost necessary for simulating the time evolution for the first time period. The time evolution means a temporal change of the quantum state. The cost is, for example, a processing time, a processing load, and power consumption.

The second generating unit 503 sets a second target circuit to be used for the local compilation method. For example, the second generating unit 503 generates a quantum circuit expressing the action of the time evolution operator for a second time period that is x times the first time period by combining x generated first quantum circuits, and sets the quantum circuit as the second target circuit. x is 2 or more. Specifically, the second generating unit 503 expands the first quantum circuit to the size $L\text{\textasciitilde}\_2$ corresponding to the second time period based on the parameter of the first quantum circuit. The size $L\text{\textasciitilde}\_2$ is specified, for example, according to the local compilation theorem. The size $L\text{\textasciitilde}\_2$ is larger than the size $L\text{\textasciitilde}\_1$, for example. Specifically, the second generating unit 503 generates a quantum circuit expressing the action of the time evolution operator for the second time period by concatenating x first quantum circuits expanded to the size $L\text{\textasciitilde}\_2$, and sets the quantum circuit as the second target circuit. The second target circuit has, for example, the size $L\text{\textasciitilde}\_2$ and the depth $d\times x$.

Specifically, a case where x=2 is considered. In this case, the second time period is specifically $2\tau$. In this case, specifically, the second generating unit 503 expands the first quantum circuit to the size $L\text{\textasciitilde}\_2$ corresponding to the second time period $2\tau$. Specifically, the second generating unit 503 generates a quantum circuit expressing the action of the time evolution operator for the second time period $2\tau$ by concatenating two first quantum circuits expanded to the size $L\text{\textasciitilde}\_2$, and sets the quantum circuit as the second target circuit. Accordingly, the second generating unit 503 may prepare the local compilation method to be executable.

The second generating unit 503 generates, based on the set second target circuit, a second quantum circuit that expresses the action of the time evolution operator for the second time period and has a depth smaller than that of the quantum circuit set as the second target circuit by the local compilation method. For example, the second generating unit 503 sets a second quantum circuit having a depth smaller than that of the quantum circuit set as the second target circuit. The second quantum circuit has, for example, the size L~_2 and the depth d. The depth d is less than the depth d_trot. For example, the second generating unit 503 updates the parameters of the second quantum circuit so as to minimize the value of the cost function representing the difference between the set second target circuit and the set second quantum circuit, thereby generating the second quantum circuit representing the action of the time evolution operator for the second time period. As a result, the second generating unit 503 may prepare the second quantum circuit with the depth suppressed to d, and may reduce the cost necessary to simulate the time evolution for the second time period. In addition, the second generating unit 503 may reduce the cost necessary to simulate the time evolution for a specific time longer than the second time period by the combination of the first quantum circuit and the second quantum circuit.

The second generating unit 503 further repeatedly performs a process of generating a second quantum circuit representing an action of a time evolution operator for a j-th time longer than the second time period by a local compilation method until a predetermined condition is satisfied. j≥3. The j-th time is a multiple of the first time period. Here, the second generating unit 503 increments j each time a second quantum circuit is generated.

For example, it is conceivable that the predetermined condition is that a second quantum circuit expressing the action of the time evolution operator for a K-th time, which is the maximum multiple of the first time period, included in the time range in which the action of the time evolution operator may be expressed is newly generated according to the local compilation theorem. In this case, the j-th time is $j\tau$.

In this case, for example, by combining the first quantum circuit and the second quantum circuit generated immediately before, the second generating unit 503 generates a quantum circuit expressing the action of the time evolution operator for the j-th time longer than the second quantum circuit by the first time period, and sets the quantum circuit as a third target circuit. Specifically, the second generating unit 503 expands the first quantum circuit and the second quantum circuit generated immediately before to the size L~_j corresponding to the j-th time $j\tau$. Specifically, the second generating unit 503 generates a quantum circuit expressing the action of the time evolution operator for the j-th time $j\tau$ by concatenating the first quantum circuit expanded to the size L~_j and the second quantum circuit generated immediately before, and sets the quantum circuit as the third target circuit. Accordingly, the second generating unit 503 may prepare the local compilation method to be executable.

For example, based on the set third target circuit, the second generating unit 503 newly generates a second quantum circuit that expresses the action of the time evolution operator for the j-th time and has a depth smaller than that of the quantum circuit set as the third target circuit by the local compilation method. Specifically, the second generating unit 503 newly sets a second quantum circuit having a depth smaller than that of the quantum circuit set as the third target circuit. Specifically, the second quantum circuit to be newly set has a size L~_j and the depth d. The depth d is less than the depth d_trot. Specifically, the second generating unit 503 sets a cost function representing a difference between the set third target circuit and the newly set second quantum circuit. The second generating unit 503 updates the parameters of the second quantum circuit so as to minimize the value of the set cost function, thereby newly generating a second quantum circuit expressing the action of the time evolution operator for the j-th time. As a result, the second generating unit 503 may newly prepare a second quantum circuit whose depth is suppressed to d, and may reduce the cost necessary for simulating the time evolution for the j-th time. Further, the second generating unit 503 may reduce the cost necessary for simulating the time evolution for a specific time longer than the j-th time by combining the first quantum circuit and each of the generated second quantum circuits.

For example, it is conceivable that the predetermined condition is that a second quantum circuit representing the action of the time evolution operator for the maximum K-th time, which is a multiple of the power of 2 of the first time period, in the time range capable of representing the action of the time evolution operator is newly generated according to the local compilation theorem. In this case, the j-th time is $(2^{(j-1)})\tau$.

In this case, for example, by combining two second quantum circuits generated immediately before, the second generating unit 503 generates a quantum circuit expressing the action of the time evolution operator for the j-th time, which is twice as long as the second quantum circuit, and sets the quantum circuit as the third target circuit. Specifically, the second generator 503 expands the second quantum circuit generated immediately before to the size L~_j corresponding to the j-th time $(2^{(j-1)}) \tau$. Specifically, the second generating unit 503 generates a quantum circuit expressing the action of the time evolution operator for the j-th time $(2^{(j-1)})\tau$ by concatenating two second quantum circuits generated immediately before and expanded to the size L~_j, and sets the quantum circuit as the third target circuit. Accordingly, the second generating unit 503 may prepare the local compilation method to be executable.

For example, based on the set third target circuit, the second generating unit 503 newly generates a second quantum circuit that expresses the action of the time evolution operator for the j-th time and has a depth smaller than that of the quantum circuit set as the third target circuit by the local compilation method. Specifically, the second generating unit 503 newly sets a second quantum circuit having a depth smaller than that of the quantum circuit set as the third target circuit. Specifically, the second quantum circuit to be newly set has the size L~_j and the depth d. The depth d is less than the depth d_trot. Specifically, the second generating unit 503 sets a cost function representing a difference between the set third target circuit and the newly set second quantum circuit. The second generating unit 503 updates the parameters of the second quantum circuit so as to minimize the value of the set cost function, thereby newly generating a second quantum circuit expressing the action of the time evolution operator for the j-th time. As a result, the second generating unit 503 may newly prepare a second quantum circuit whose depth is suppressed to d and thereby enables reduction of the cost necessary for simulating the time evolution for the j-th time. Further, the second generating unit 503 enables reduction of the cost necessary for simulating the time evolution for a specific time longer than the j-th time by combining the first quantum circuit and each of the generated second quantum circuits.

Here, while a case where the second generating unit 503 combines the first quantum circuit and the second quantum circuit generated immediately before and a case where the second generating unit 503 combines two second quantum circuits generated immediately before have been described, the present disclosure is not limited hereto. For example, the second generating unit 503 may selectively combine multiple quantum circuits from quantum circuits set including a first quantum circuit and a generated second quantum circuit in a manner other than the combination described above. Specifically, the second generating unit 503 selectively expands multiple quantum circuits from the quantum circuit set to the size $L\sim\_j$ and then combines the expanded quantum circuits to thereby set the third target circuit and newly generate the second quantum circuit expressing the action of the time evolution operator for the j-th time.

Specifically, the second generating unit 503 may set the third target circuit by expanding the first quantum circuit to the size $L\sim\_j$ and combining three or more first quantum circuits. Specifically, the second generating unit 503 may set the third target circuit by expanding the second quantum circuit to the size $L\text{-}\_j$ and then combining two or more second quantum circuits. Specifically, the second generating unit 503 may set the third target circuit by expanding each of two different types of second quantum circuits to the size $L\sim\_j$ and then combining the expanded second quantum circuits.

The calculating unit 504 solves the target problem using the first quantum circuit generated by the first generating unit 502 and the second quantum circuit generated by the second generating unit 503 to obtain a solution to the target problem. The calculating unit 504 may solve the target problem by controlling the calculation device 201, for example. Specifically, for example, the operation unit 504 generates a combinational circuit expressing the action of the time evolution operator for a predetermined time by selectively combining a plurality of quantum circuits from a quantum circuit set including the first quantum circuit and the generated second quantum circuit. The operation unit 504 simulates a temporal change of the quantum state for a predetermined time based on the generated combinational circuit. Accordingly, the calculating unit 504 may solve the target problem and execute specific calculation processing such as quantum chemical calculation or material physical property calculation.

The output unit 505 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 505 may notify the user of the processing result of at least one of the functional units, and the convenience of the information processing device 100 may be improved.

The output unit 505 outputs, for example, the first quantum circuit generated by the first generating unit 502. Specifically, the output unit 505 transmits the first quantum circuit to another computer. The other computer is, for example, the computing device 201 or the client device 202. The output unit 505 may output the first quantum circuit so that a user may refer to the first quantum circuit. Thus, the output unit 505 may make the first quantum circuit available externally. The output unit 505 may externally solve the target problem.

The output unit 505 outputs, for example, the second quantum circuit generated by the second generating unit 503. Specifically, the output unit 505 transmits the second quantum circuit to another computer. The other computer is, for example, the computing device 201 or the client device 202. The output unit 505 may output the second quantum circuit so that the user may refer to the second quantum circuit. Thus, the output unit 505 may make the second quantum circuit available externally. The output unit 505 may externally solve a target problem, and may execute specific calculation processing such as quantum chemical calculation or material physical property calculation.

The output unit 505 outputs, for example, a result of solving a target problem by the calculating unit 504. Specifically, the output unit 505 transmits the result of solving the target problem to another computer. The other computer is, for example, the client device 202. Specifically, the output unit 505 may output the result of solving the target question so that the user may refer to the result. Accordingly, the output unit 505 may make the result of solving the target problem available externally.

Here, while a case where the information processing device 100 includes the first generating unit 502, the second generating unit 503, and the calculating unit 504 has been described, the present disclosure is not limited hereto. For example, the information processing device 100 may omit any of the functional units. Specifically, there may be a case where the information processing device 100 does not include the calculating unit 504. Specifically, the information processing device 100 may be capable of communicating with another computer including the calculating unit 504 and may use the calculating unit 504 via the other computer.

Next, an operation example of the information processing device 100 is described with reference to Figs. 6 to 10. In the operation example, the information processing device 100 generates a quantum circuit $V(\theta^{\wedge *}\_j)$ as an approximate circuit corresponding to the time evolution operator exp(-i($\tau$_j)H) for multiple time steps {$\tau$_j} (j=1, 2, ..., K) by a local compilation method. {$\tau$_j} is a set of $\tau$_j. For example, the information processing device 100 generates a quantum circuit V($\theta$^*_j) as an approximate circuit by variational optimization with a compile size L~_j according to the following expression (11).

$$\tilde{L}_j = v_{LR}\tau_j + \tilde{L}_0 \quad \dots (11)$$

Here, specifically, a case in which the information processing device 100 sets {$\tau$_j} according to an equivalent time stepping (ETS) method is considered. In this case, $\tau$_j=j$\tau$. Therefore, {$\tau$_j}={$\tau$, 2$\tau$, 3$\tau$, ..., K$\tau$}. In this case, specifically, for j>1, the information processing device 100 sets V($\theta$^*_(j-1))V($\theta$^*_1) defined by the following expression (12) as the target circuit, and generates the quantum circuit V($\theta$^*_j) having the compile size L~_j.

$$V\left(\theta_{j-1}^*\right)V(\theta_1^*) \approx \exp(-i\tau_j H) \quad \dots (12)$$

Specifically, a case in which the information processing device 100 sets {$\tau$_j} according to a binary time stepping (BTS) method is considered. In this case, $\tau$_j=2^(j-1) $\tau$. Therefore, {$\tau$_j}={$\tau$, 2$\tau$, 4$\tau$, ..., 2^(K - 1) $\tau$}. In this case, specifically, for j>1, the information processing device 100 sets (V($\theta$^*_(j-1)))^2 indicated in the following expression (13), as the target circuit, and generates the quantum circuit V($\theta$^*_j) of the compile size L~_j.

$$\left(V\left(\theta_{j-1}^*\right)\right)^2 \approx \exp(-i\tau_j H) \quad \dots (13)$$

Thus, the information processing device 100 may efficiently simulate long-time dynamics by combining the generated quantum circuits V($\theta$^*_j). Specifically, when the ETS method is used, the information processing device 100 may suppress the number of quantum gates/the depth of the quantum circuit to 1/K, and may suppress the processing time to 1/K^2. In addition, specifically, when the BTS method is used, the information processing device 100 may suppress the number of quantum gates/the depth of the quantum circuit to 1/(2^(K-1)) and may suppress the processing time to 1/(4^(K-1)).

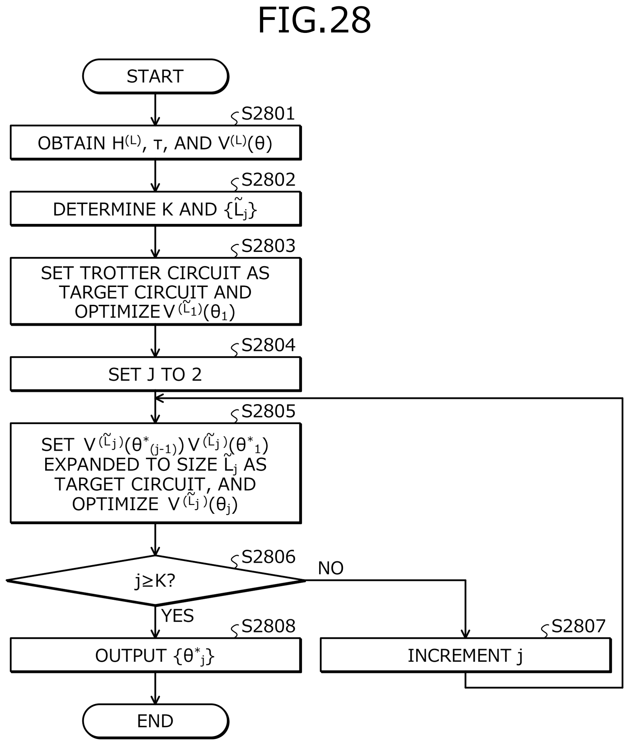

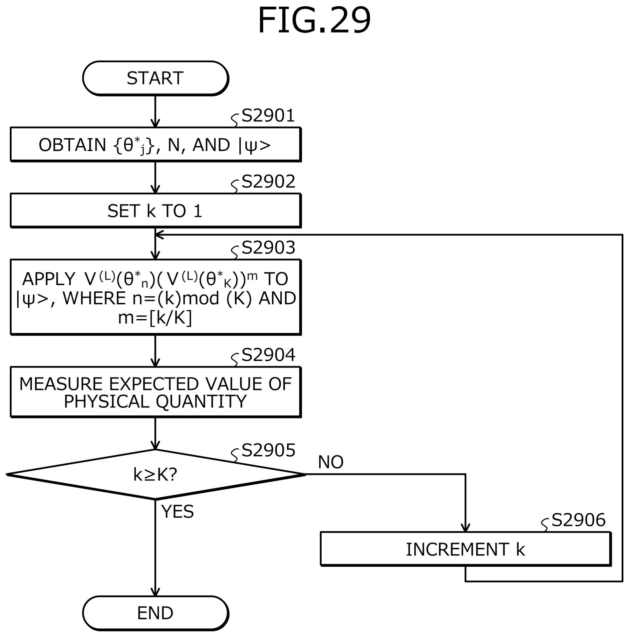

Here, an example in which the information processing device 100 uses the ETS method is described with reference to Figs. 6 to 8. An example of a processing procedure when the information processing device 100 uses the ETS method is described later with reference to Figs. 28 and 29.

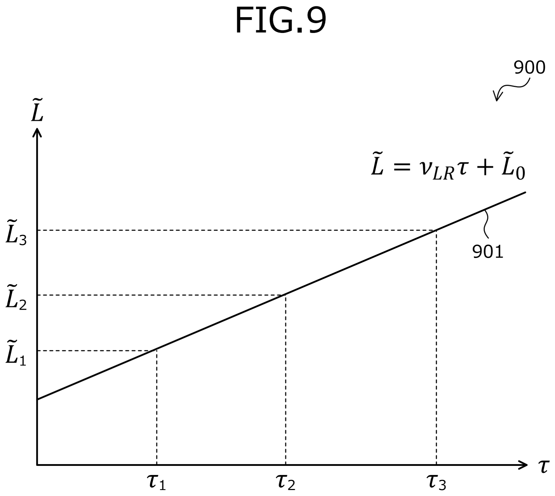

Figs. 6, 7, and 8 are explanatory diagrams depicting an example in which the ETS method is used. In Fig. 6, the information processing device 100 sets $\tau$_1=$\tau$. The information processing device 100 sets the compile size L~_1 based on $\tau$_1 according to the above expression (11). An example in which the information processing device 100 sets the compile size L~_1 is described later with reference to Fig. 9.

(6-1) The information processing device 100 generates a trotter circuit U^(L~_1)_trot defined by the following expression (14), which has the compile size L~_1 and the depth d_trot, and sets the trotter circuit U^(L~_1)_trot in the first target circuit 600.

$$U_{\text{trot}}^{(\tilde{L}_1)} \approx \exp(-i\tau H^{(\tilde{L}_1)}) \quad \dots (14)$$

(6-2) The information processing device 100 sets the initialized variational quantum circuit V^(L~_1)($\theta$_1). The information processing device 100 optimizes $\theta$_1 to $\theta$^*_1 so as to minimize the value of the cost function representing the difference between the first target circuit 600 and the variational quantum circuit V^(L~_1)($\theta$_1). As a result, the information processing device 100 generates a variational quantum circuit V^(L~_1)($\theta$^*_1) having the depth d, defined by the following expression (15) indicated by reference numeral 610, which expresses the action of the time evolution operator of $\tau$_1 min.

$$V^{(\tilde{L}_1)}(\theta_1^*) \approx \exp(-i\tau H^{(\tilde{L}_1)}) \quad \dots (15)$$

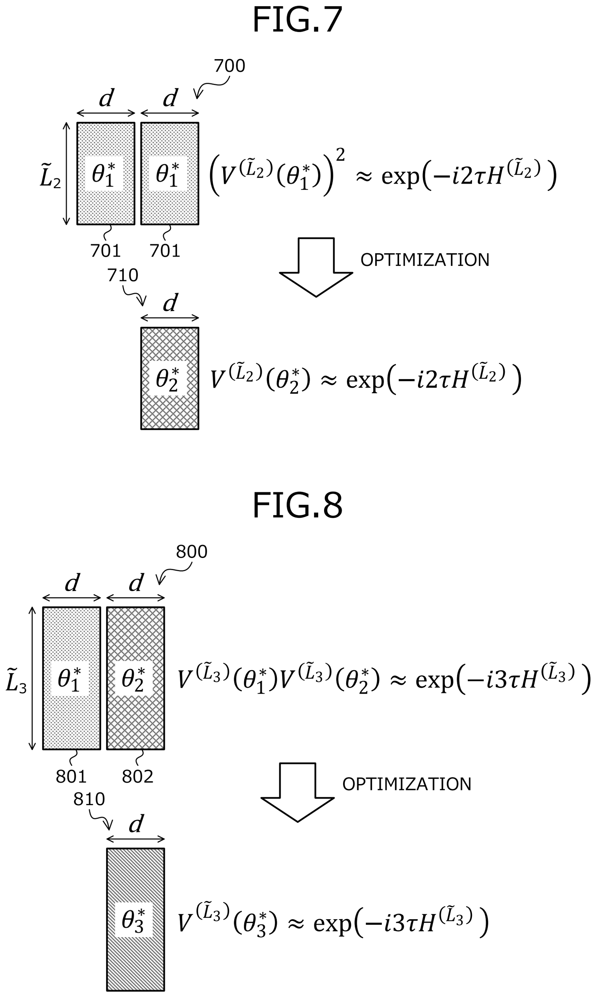

Next, Fig. 7 is described. In Fig. 7, the information processing device 100 sets $\tau$_2=2$\tau$. The information processing device 100 sets the compile size L~_2 based on $\tau$_2 according to with the above expression (11). An example in which the information processing device 100 sets the compile size L~_2 is described later with reference to Fig. 9.

(7-1) The information processing device 100 generates a variational quantum circuit V^(L~_2)($\theta$^*_1) indicated by reference numeral 701, by expanding the variational quantum circuit V^(L~_1)($\theta$^*_1) to the compile size L~_2 based

on the parameter $\theta^{\wedge *}\_1$. The information processing device 100 concatenates two generated variational quantum circuits $V^{\wedge}(L\sim\_2)(\theta^{\wedge *}\_1)$. As a result, the information processing device 100 generates a variational quantum circuit $(V^{\wedge}(L\sim\_2)(\theta^{\wedge *}\_1))^{\wedge}2$ defined by the following expression (16) having the compile size $L\sim\_2$ and the depth 2d, and sets the variational quantum circuit in the second target circuit 700.

$$\left(V^{(\tilde{L}_2)}(\theta_1^*)\right)^2 \approx \exp(-i2\tau H^{(\tilde{L}_2)}) \quad \ldots (16)$$

(7-2) The information processing device 100 sets the initialized variational quantum circuit $V^{\wedge}(L\sim\_2)(\theta\_2)$. The information processing device 100 optimizes $\theta\_2$ to $\theta^{\wedge *}\_2$ so as to minimize the value of the cost function representing the difference between the second target circuit 700 and the variational quantum circuit $V^{\wedge}(L\sim\_2)(\theta\_2)$. Accordingly, the information processing device 100 generates a variational quantum circuit $V^{\wedge}(L\sim\_2)(\theta^{\wedge *}\_2)$ having the depth d, defined by the following expression (17) indicated by reference numeral 710, which expresses the action of the time evolution operator of $\tau\_2$.

$$V^{(\tilde{L}_2)}(\theta_2^*) \approx \exp(-i2\tau H^{(\tilde{L}_2)}) \quad \ldots (17)$$

Next, Fig. 8 is described. For j>2, the information processing device 100 sets $V^{\wedge}(L\sim\_j)(\theta^{\wedge *}\_(j-1))V^{\wedge}(L\sim\_j)(\theta^{\wedge *}\_1)$ as a target circuit and sequentially repeats generation of a quantum circuit $V^{\wedge}(L\sim\_j)(\theta^{\wedge *}\_j)$ of the compile size $L\sim\_j$ until j=K.
In Fig. 8, the information processing device 100 sets $\tau\_3=3\tau$. The information processing device 100 sets the compile size $L\sim\_3$, based on $\tau\_3$ according to the above expression (11). An example in which the information processing device 100 sets the compile size $L\sim\_3$ is described later with reference to Fig. 9.
(8-1) The information processing device 100 generates a variational quantum circuit $V^{\wedge}(L\sim\_3)(\theta^{\wedge *}\_1)$ indicated by reference numeral 801 by expanding the variational quantum circuit $V^{\wedge}(L\sim\_1)(\theta^{\wedge *}\_1)$ to the compile size $L\sim\_3$, based on the parameter $\theta^{\wedge *}\_1$. The information processing device 100 generates a variational quantum circuit $V^{\wedge}(L\sim\_3)(\theta^{\wedge *}\_2)$ indicated by reference numeral 802 by expanding the variational quantum circuit $V^{\wedge}(L\sim\_2)(\theta^{\wedge *}\_2)$ to the compile size $L\sim\_3$, based on the parameter $\theta^{\wedge *}\_2$.
The information processing device 100 concatenates the generated variational quantum circuit $V^{\wedge}(L\sim\_3)(\theta^{\wedge *}\_1)$ and the generated variational quantum circuit $V^{\wedge}(L\sim\_3)(\theta^{\wedge *}\_2)$. As a result, the information processing device 100 generates a variational quantum circuit $V^{\wedge}(L\sim\_3)(\theta^{\wedge *}\_1)V^{\wedge}(L\sim\_3)(\theta^{\wedge *}\_2)$ defined by the following expression (18) having the compile size $L\sim\_3$ and the depth 2d, and sets the variational quantum circuit $V^{\wedge}(L\sim\_3)(\theta^{\wedge *}\_1)V^{\wedge}(L\sim\_3)(\theta^{\wedge *}\_2)$ as the third target circuit 800.

$$V^{(\tilde{L}_3)}(\theta_1^*)V^{(\tilde{L}_3)}(\theta_2^*) \approx \exp(-i3\tau H^{(\tilde{L}_3)}) \quad \ldots (18)$$

(8-2) The information processing device 100 sets the initialized variational quantum circuit $V^{\wedge}(L\sim\_3)(\theta\_3)$. The information processing device 100 optimizes $\theta\_3$ to $\theta^{\wedge *}\_3$ so as to minimize the value of the cost function representing the difference between the third target circuit 800 and the variational quantum circuit $V^{\wedge}(L\sim\_3)(\theta\_3)$. As a result, the information processing device 100 generates a variational quantum circuit $V^{\wedge}(L\sim\_3)(\theta^{\wedge *}\_3)$ having the depth d, defined by the following expression (19) indicated by reference numeral 810, which expresses the action of the time evolution operator of $\tau\_3$ minutes.

$$V_3^{(\tilde{L}_3)}(\theta_3^*) \approx \exp(-i3\tau H^{(\tilde{L}_3)}) \quad \ldots (19)$$

In the examples depicted in Figs. 6 to 8, K=3. Thus, the information processing device 100 may generate the variational quantum circuit $V^{\wedge}(L\sim\_1)(\theta^{\wedge *}\_1)$, the variational quantum circuit $V^{\wedge}(L\sim\_2)(\theta^{\wedge *}\_2)$, and the variational quantum circuit $V^{\wedge}(L\sim\_3)(\theta^{\wedge *}\_3)$, each having the depth d. Therefore, the information processing device 100 may suppress the depth of the variational quantum circuit $V^{\wedge}(L\sim\_j)(\theta^{\wedge *}\_j)$ representing the time evolution operator for each time $\tau\_j$ of $\{\tau\_j\}$ to d. The information processing device 100 may reduce the processing time necessary to simulate the temporal change of the quantum state for each time $\tau\_j$ of $\{\tau\_j\}$.
In addition, the information processing device 100 may express a time evolution operator for a time relatively longer than $\tau\_K$ by combining the variational quantum circuits $V^{\wedge}(L\sim\_j)(\theta^{\wedge *}\_j)$. For example, the information processing device 100 may reduce the sum of the depths of the variational quantum circuits in the combination of the variational quantum circuits expressing the time evolution operator for a time relatively longer than $\tau\_K$.
Therefore, the information processing device 100 may efficiently simulate long-time dynamics. The information processing device 100 may reduce the processing time necessary to simulate temporal change of the quantum state for a time relatively longer than $\tau\_K$. Specifically, the information processing device 100 may suppress the number of quantum gates/the depth of the quantum circuit to $1/K$, and may suppress the processing time to $1/K^2$.

Here, while a case where the information processing device 100 sets $V^{(L\sim\_j)}(\theta^{\wedge *}\_{(j-1)})V^{(L\sim\_j)}(\theta^{\wedge *}\_1)$ as the target circuit for $j>2$ has been described, the present disclosure is not limited hereto. For example, the information processing device 100 may set the target circuit by another combination method of the generated variational quantum circuits.

Specifically, the information processing device 100 may set $V^{(L\sim\_j)}(\theta^{\wedge *}\_1)V^{(L\sim\_j)}(\theta^{\wedge *}\_{(j-1)})$ as the target circuit for $j>2$. Specifically, the information processing device 100 may set $(V^{(L\sim\_j)}(\theta^{\wedge *}\_2))^{(j/2)}$ as the target circuit for j=even number. Specifically, the information processing device 100 may set $(V^{(L\sim\_j)}(\theta^{\wedge *}\_2))^{(j-1)/2)}V^{(L\sim\_j)}(\theta^{\wedge *}\_1)$ as the target circuit for j=odd number.

Specifically, the information processing device 100 preferably sets the target circuit so that the depth of the target circuit is reduced. For j>2, the processing time necessary to generate $V^{(L\sim\_j)}(\theta^{\wedge *}\_j)$ tends to be shorter as the depth of the target circuit is smaller. Next, an example in which the information processing device 100 sets the compile size $L\sim\_j$ is described with reference to Fig. 9.

Fig. 9 is an explanatory diagram depicting an example of setting the compile size $L\sim\_j$. In Fig. 9, a graph 900 represents the relationship between the compile size $L\sim\_j$ and the time $\tau\_j$ based on the local compilation theorem. A line segment 901 represents the following expression (20). As indicated by the line segment 901, the longer the time $\tau\_j$, the larger the compile size $L\sim\_j$. $v\_(LR)$ is a Lieb-Robinson rate. The Lieb-Robinson rate is the limiting value of the information transfer rate in quantum many-body systems. $L\sim\_0$ is a constant.

$$\tilde{L}_j = v_{LR}\tau_j + \tilde{L}_0 \quad ...(20)$$

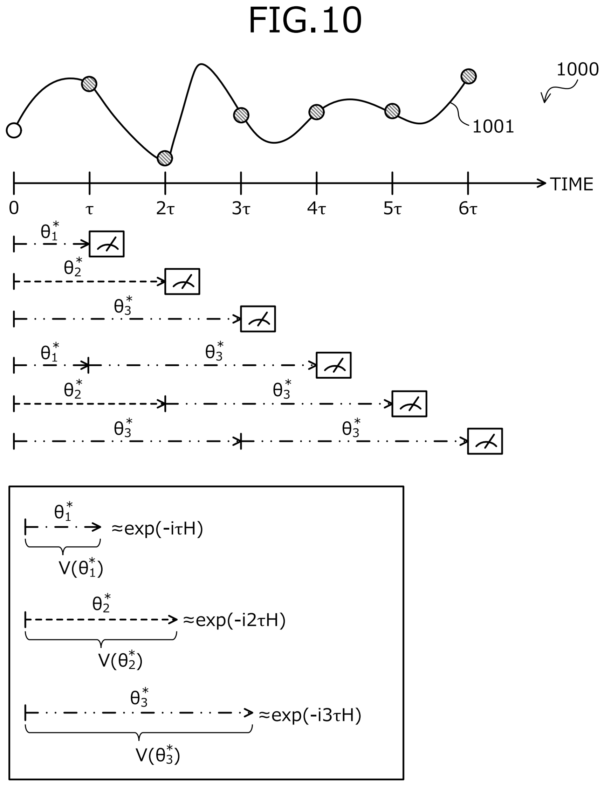

Here, the local compilation method is effective for $\tau$ in the short time domain of 0 or more and $\tau\_{max}$ or less corresponding to the range of $L \geq L\sim$ according to the above expression (20), but is not effective for $\tau$ of $\tau\_{max}$ or more corresponding to $L=L\sim$. Therefore, $\tau\_K$ is preferably not more than $\tau\_{max}$. Next, description is given with reference to Fig. 10; an example in which the information processing device 100 combines variational quantum circuits $V^{(L\sim\_j)}(\theta^{\wedge *}\_j)$ and performs a quantum many-body system simulation for a long time is described.

Fig. 10 is an explanatory diagram depicting an example of performing a quantum many-body system simulation for a long time. In Fig. 10, the information processing device 100 generates the variational quantum circuit $V^{(L)}(\theta^{\wedge *}\_j)$ by expanding the variational quantum circuit $V^{(L\sim\_j)}(\theta^{\wedge *}\_j)$ to the compile size L. In the following description, the variational quantum circuit $V^{(L)}(\theta^{\wedge *}\_j)$ is referred to as a "variational quantum circuit $V^{(\theta^{\wedge *}\_j)}$". The number of quantum gates/the depth of the quantum circuit in the variational quantum circuit $V(\theta^{\wedge *}\_j)$ is constant.

In the example of Fig. 10, it is assumed that the information processing device 100 performs the quantum many-body system simulation for $6\tau$ longer than $\tau\_{max}$. Specifically, it is assumed that the information processing device 100 simulates temporal changes of quantum states corresponding to respective multiples of $\tau$ in a range of $6\tau$ or less. A graph 1000 represents a quantum state with respect to a time axis. A curve 1001 represents a temporal change in the quantum state. Here, the quantum state at time 0 is $|\psi\rangle$.

When simulating the temporal change of the quantum state for $\tau$, the information processing device 100 applies the variational quantum circuit $V(\theta^{\wedge *}\_1)$ to $|\psi\rangle$ and measures the expected value of the physical quantity. As a result, the information processing device 100 may simulate the temporal change of the quantum state for $\tau$ using the quantum circuit $V(\theta^{\wedge *}\_1)$ suppressed to the depth d. Therefore, the information processing device 100 may reduce the processing time necessary for simulating the temporal change of the quantum state for $\tau$ minutes.

When simulating the temporal change of the quantum state for $2\tau$, the information processing device 100 applies the variational quantum circuit $V(\theta^{\wedge *}\_2)$ to $|\psi\rangle$ and measures the expected value of the physical quantity. Thus, the information processing device 100 may simulate the temporal change of the quantum state for $2\tau$ using the quantum circuit $V(\theta^{\wedge *}\_2)$ suppressed to the depth d. Therefore, the information processing device 100 may reduce the processing time necessary for simulating the temporal change of the quantum state for $2\tau$.

When simulating the temporal change of the quantum state for $3\tau$, the information processing device 100 applies the variational quantum circuit $V(\theta^{\wedge *}\_3)$ to $|\psi\rangle$ and measures the expected value of the physical quantity. Thus, the information processing device 100 may simulate the temporal change of the quantum state for $3\tau$ using the quantum circuit $V(\theta^{\wedge *}\_3)$ suppressed to the depth d. Therefore, the information processing device 100 may reduce the processing time necessary for simulating the temporal change of the quantum state for $3\tau$.

When simulating a temporal change of a quantum state for $4\tau$, the information processing device 100 applies a combination of the variational quantum circuit $V(\theta^{\wedge *}\_1)$ and the variational quantum circuit $V(\theta^{\wedge *}\_3)$ to $|\psi\rangle$, and measures an expected value of a physical quantity. Thus, the information processing device 100 may simulate the temporal change of the quantum state for $4\tau$ using the combination of the variational quantum circuit $V(\theta^{\wedge *}\_1)$ and the variational quantum circuit $V(\theta^{\wedge *}\_3)$ in which the total depth is suppressed to 2d. Therefore, the information processing device 100 may reduce the processing time necessary for simulating the temporal change of the quantum state for $4\tau$. When simulating a temporal change of a quantum state for $4\tau$, the information processing device 100 may apply a combination of two variational quantum circuits $V(\theta^{\wedge*}\_2)$ to $|\psi>$ to measure an expected value of a physical quantity.

When simulating a temporal change of a quantum state for $5\tau$, the information processing device 100 applies a combination of the variational quantum circuit $V(\theta^{\wedge*}\_2)$ and the variational quantum circuit $V(\theta^{\wedge*}\_3)$ to $|\psi>$, and measures an expected value of a physical quantity. Thus, the information processing device 100 may simulate the temporal change of the quantum state for $5\tau$ by using the combination of the variational quantum circuit $V(\theta^{\wedge*}\_2)$ and the variational quantum circuit $V(\theta^{\wedge*}\_3)$ in which the total depth is suppressed to 2d. Therefore, the information processing device 100 may reduce the processing time necessary for simulating the temporal change of the quantum state for $5\tau$. When simulating the temporal change of the quantum state for $5\tau$, the information processing device 100 may apply a combination of the variational quantum circuit $V(\theta^{\wedge*}\_1)$ and two variational quantum circuits $V(\theta^{\wedge*}\_2)$ to $|\psi>$ to measure the expected value of the physical quantity.

When simulating the temporal change of the quantum state for $6\tau$, the information processing device 100 applies a combination of two variational quantum circuits $V(\theta^{\wedge*}\_3)$ to $|\psi>$ to measure the expected value of the physical quantity. Thus, the information processing device 100 may simulate the temporal change of the quantum state for $6\tau$ using the combination of the two variational quantum circuits $V(\theta^{\wedge*}\_3)$ in which the total depth is suppressed to 2d. Therefore, the information processing device 100 may reduce the processing time necessary for simulating the temporal change of the quantum state for $6\tau$. When simulating the temporal change of the quantum state for $6\tau$, the information processing device 100 may apply a combination of three variational quantum circuits $V(\theta^{\wedge*}\_2)$ to $|\psi>$ to measure the expected value of the physical quantity.

The information processing device 100 preferably uses the variational quantum circuit $V(\theta^{\wedge*}\_K)$ when simulating the temporal change of the quantum state for $j\tau$. Here, K=3. By using the variational quantum circuit $V(\theta^{\wedge*}\_K)$, the information processing device 100 may efficiently reduce the number of quantum gates used when simulating the temporal change of the quantum state for $j\tau$.

Here, in the case of simulating a temporal change of a quantum state for $j\tau$, a method of applying a combination of j variational quantum circuits $V(\theta^{\wedge*}\_1)$ to $|\psi>$ is conceivable. In this method, j variational quantum circuits $V(\theta^{\wedge*}\_1)$ having a total depth of jd are used to simulate the temporal change of the quantum state corresponding to $j\tau$ and there is a problem in that the processing time necessary to simulate the temporal change of the quantum state corresponding to $j\tau$ increases.

On the other hand, the information processing device 100 may simulate the temporal change of the quantum state for $j\tau$ without using the combination of j variational quantum circuits $V(\theta^{\wedge*}\_1)$. Therefore, the information processing device 100 may reduce the processing time necessary for simulating the temporal change of the quantum state for $j\tau$. For example, when simulating the temporal change of the quantum state for $j\tau$, the information processing device 100 may suppress the number of quantum gates/the depth of the quantum circuit to $O(N/K)$, and may suppress the processing time to $O((N^2)/(K^2))$.

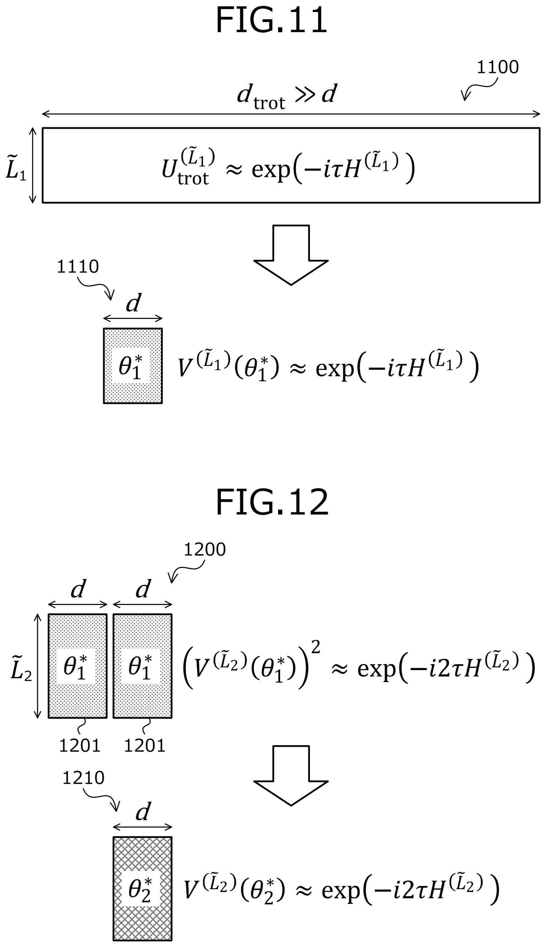

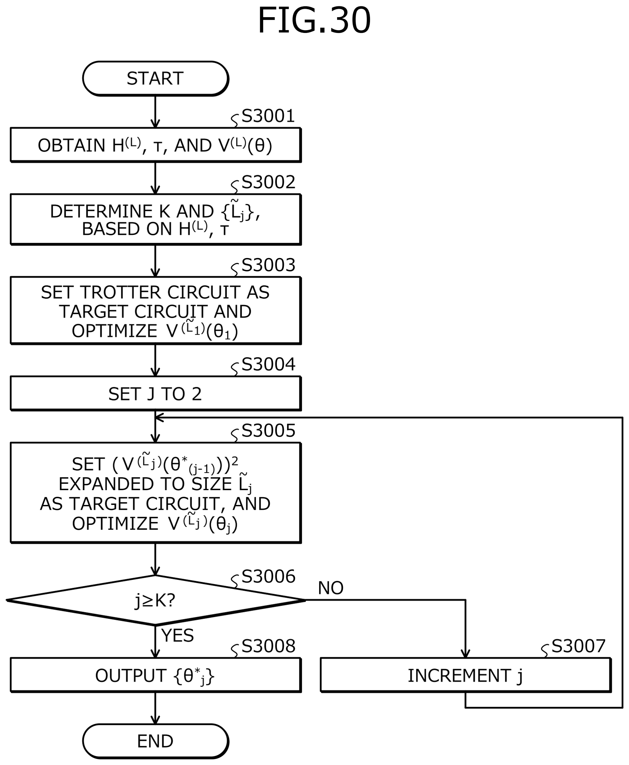

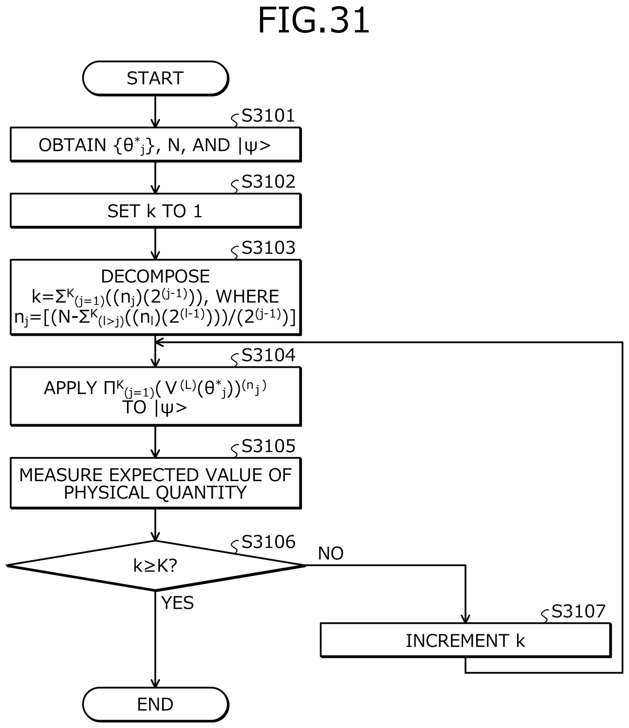

Here, an example in which the information processing device 100 uses the BTS method is described with reference to Figs. 11 to 13. An example of a processing procedure when the information processing device 100 uses the BTS method is described later with reference to Figs. 30 and 31.

Figs. 11, 12, and 13 are explanatory diagrams depicting an example in which the BTS method is used. In Fig. 11, the information processing device 100 sets $\tau\_1=\tau$. The information processing device 100 sets the compile size $L\sim\_1$, based on $\tau\_1$ according to the above expression (20). An example in which the information processing device 100 sets the compile size $L\sim\_1$ is the same as that depicted in Fig. 9.

(11-1) The information processing device 100 generates a trotter circuit $U^{\wedge}(L\sim\_1)\_{trot}$ defined by the following expression (21), which has the compile size $L\sim\_1$ and the depth $d\_{trot}$, and sets the trotter circuit $U^{\wedge}(L\sim\_1)\_{trot}$ as the first target circuit 1100.

$$U_{\text{trot}}^{(\tilde{L}_1)} \approx \exp(-i\tau H^{(\tilde{L}_1)}) \quad \ldots (21)$$

(11-2) The information processing device 100 sets the initialized variational quantum circuit $V^{\wedge}(L\sim\_1)(\theta\_1)$. The information processing device 100 optimizes $\theta\_1$ to $\theta^{\wedge*}\_1$ so as to minimize the value of the cost function representing the difference between the first target circuit 1100 and the variational quantum circuit $V^{\wedge}(L\sim\_1)(\theta\_1)$. As a result, the information processing device 100 generates a variational quantum circuit $V^{\wedge}(L\sim\_1)(\theta^{\wedge*}\_1)$ having the depth d, defined by the following expression (22) indicated by reference numeral 1110, which expresses the action of the time evolution operator of $\tau\_1$ min.

$$V^{(\tilde{L}_1)}(\theta_1^*) \approx \exp(-i\tau H^{(\tilde{L}_1)}) \quad \ldots (22)$$

Next, Fig. 12 is described. For j>1, the information processing device 100 sets, as a target circuit, $(V^{\wedge}(L\sim\_j)(\theta^{\wedge*}\_$

(j-1)))^2 having a depth 2d and sequentially repeats generation of a quantum circuit V^(L~_j)(θ^*_j) having the compile size L~_j until j=K. (V^(L~_j)(θ^*_(j-1)))^2 is defined by the following expression (23).

$$\left(V^{(\tilde{L}_j)}\left(\theta_{j-1}^*\right)\right)^2 \approx \exp(-i\tau_j H^{(\tilde{L}_j)}) \quad \dots (23)$$

In Fig. 12, the information processing device 100 sets $\tau\_2=2\tau$. The information processing device 100 sets the compile size L~_2 based on $\tau\_2$ according to the above expression (20). An example in which the information processing device 100 sets the compile size L~_2 is the same as that depicted in Fig. 9.

(12-1) The information processing device 100 generates a variational quantum circuit V^(L~_2)(θ^*_1) indicated by reference numeral 1201 by expanding the variational quantum circuit V^(L~_1)(θ^*_1) to the compile size L~_2 based on the parameter θ^*_1. The information processing device 100 concatenates two generated variational quantum circuits V^(L~_2)(θ^*_1). As a result, the information processing device 100 generates a variational quantum circuit (V^(L~_2) (θ^*_1))^2 defined by the following expression (24) having the compile size L~_2 and the depth 2d, and sets the variational quantum circuit in the second target circuit 1200.

$$\left(V^{(\tilde{L}_2)}\left(\theta_1^*\right)\right)^2 \approx \exp(-i2\tau H^{(\tilde{L}_2)}) \quad \dots (24)$$

(12-2) The information processing device 100 sets the initialized variational quantum circuit V^(L~_2)(θ_2). The information processing device 100 optimizes θ_2 to θ^*_2 so as to minimize the value of the cost function representing the difference between the second target circuit 1200 and the variational quantum circuit V^(L~_2)(θ_2). Accordingly, the information processing device 100 generates a variational quantum circuit V^(L~_2)(θ^*_2) having the depth d, defined by the following expression (25) indicated by reference numeral 1210, which expresses the action of the time evolution operator of $\tau\_2$.

$$V^{(\tilde{L}_2)}\left(\theta_2^*\right) \approx \exp(-i2\tau H^{(\tilde{L}_2)}) \quad \dots (25)$$

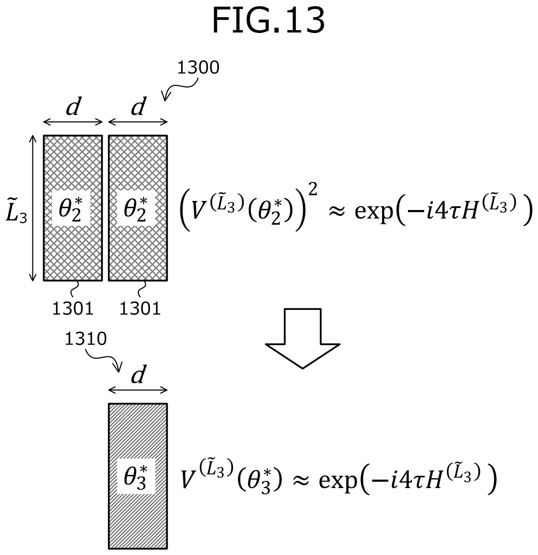

Next, Fig. 13 is described. In Fig. 13, the information processing device 100 sets $\tau\_3=4\tau$. The information processing device 100 sets the compile size L~_3 based on $\tau\_3$ according to the above expression (20). An example in which the information processing device 100 sets the compile size L~_3 is the same as that depicted in Fig. 9.

(13-1) The information processing device 100 generates a variational quantum circuit V^(L~_3)(θ^*_2) indicated by reference numeral 1301 by expanding the variational quantum circuit V^(L~_2)(θ^*_2) to the compile size L~_3 based on the parameter θ^*_2. The information processing device 100 concatenates two generated variational quantum circuits V^(L~_3)(θ^*_2). As a result, the information processing device 100 generates a variational quantum circuit (V^(L~_3) (θ^*_2))^2 defined by the following expression (26) having the compile size L~_3 and the depth 2d, and sets the variational quantum circuit in the third target circuit 1300.

$$\left(V^{(\tilde{L}_3)}\left(\theta_2^*\right)\right)^2 \approx \exp(-i4\tau H^{(\tilde{L}_3)}) \quad \dots (26)$$

(13-2) The information processing device 100 sets the initialized variational quantum circuit V^(L~_3)(θ_3). The information processing device 100 optimizes θ_3 to θ^*_3 so as to minimize the value of the cost function representing the difference between the third target circuit 1300 and the variational quantum circuit V^(L~_3)(θ_3). As a result, the information processing device 100 generates a variational quantum circuit V^(L~_3)(θ^*_3) having the depth d, defined by the following expression (27) indicated by reference numeral 1310, which expresses the action of the time evolution operator of $\tau\_3$ minutes.

$$V_3^{(\tilde{L}_3)}\left(\theta_3^*\right) \approx \exp(-i4\tau H^{(\tilde{L}_3)}) \quad \dots (27)$$

In the examples of Figs. 11 to 13, K=3. Thus, the information processing device 100 may generate the variational quantum circuit V^(L~_1)(θ^*_1), the variational quantum circuit V^(L~_2)(θ^*_2), and the variational quantum circuit V^ (L~_3)(θ^*_3), each having the depth d. Therefore, the information processing device 100 may suppress the depth of the variational quantum circuit V^(L~_j)(θ^*_j) representing the time evolution operator for each time $\tau\_j$ of {$\tau\_j$} to d. The information processing device 100 may reduce the processing time necessary to simulate the temporal change of the quantum state for each time $\tau\_j$ of {$\tau\_j$}.

In addition, the information processing device 100 may express a time evolution operator for a time relatively longer than τ_K by combining the variational quantum circuits V^(L~_j)(θ^*_j). For example, the information processing device 100 may reduce the sum of the depths of the variational quantum circuits in the combination of the variational quantum circuits expressing the time evolution operator for a time relatively longer than τ_K. Therefore, the information processing device 100 may efficiently simulate long-time dynamics. The information processing device 100 may reduce the processing time necessary to simulate the temporal change of the quantum state for a time relatively longer than τ_K.

Specifically, the information processing device 100 may suppress the number of quantum gates/the depth of the quantum circuit to $1/(2^{(K-1)})$, and may suppress the processing time to $1/(4^{(K-1)})$. As described above, the information processing device 100 may reduce the number of quantum gates/the depth of the quantum circuit in each of the case of using the ETS method and the case of using the BTS method, and may reduce the processing time necessary for simulating the temporal change of the quantum state.

Further, the information processing device 100 may suppress the depth of the j-th target circuit in each of the case of using the ETS method and the case of using the BTS method, and may reduce the cost necessary for generating the variational quantum circuit V^(L~_j)(θ^*_j). The cost is, for example, a processing time, a processing load, and power consumption.

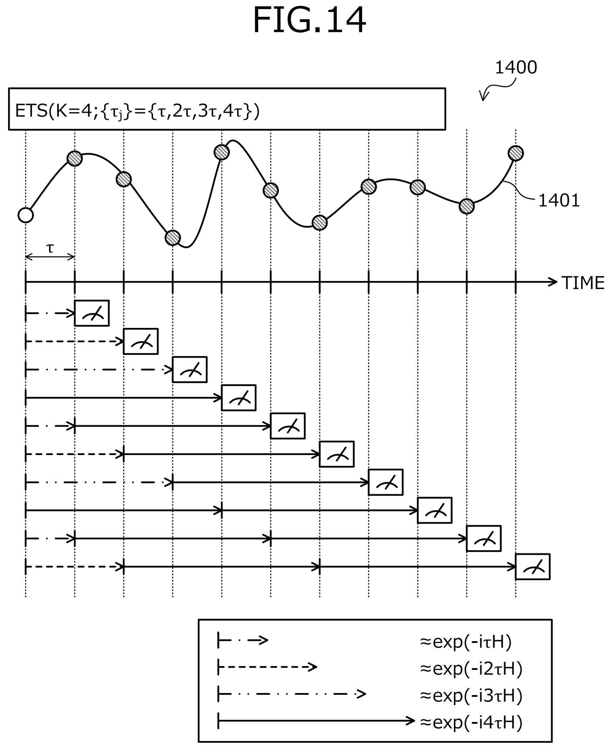

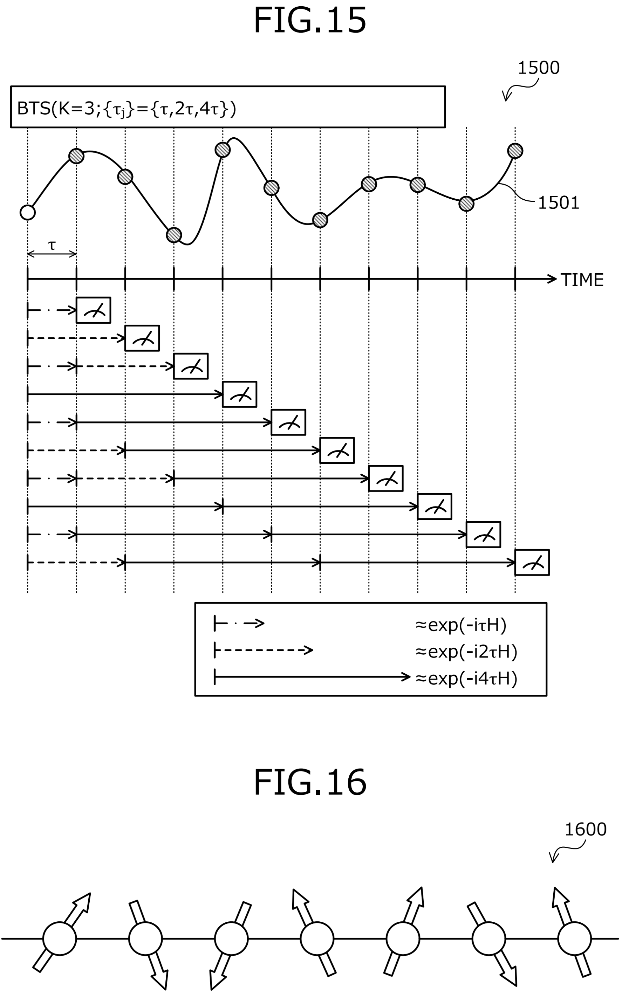

Here, while a case where the information processing device 100 sets $(V^{(L~\_j)}(θ^{*}\_{(j-1)}))2$ as the target circuit for j>1 has been described, the present disclosure is not limited hereto. For example, the information processing device 100 may set the target circuit by another combination method of the generated variational quantum circuits. Specifically, the information processing device 100 may set $(V^{(L~\_j)}(θ^{*}\_{(j-2)}))^4$ as the target circuit for j>1. Next, with reference to Figs. 14 and 15, examples of effects in a case where the information processing device 100 uses the ETS method and a case where the information processing device 100 uses the BTS method are described and compared.

Figs. 14 and 15 are explanatory diagrams depicting examples of effects in the case of using the ETS method and the case of using the BTS method. Specifically, Fig. 14 depicts an example of an effect when the information processing device 100 uses the ETS method. The graph 1400 represents quantum states with respect to time. A curve 1401 represents temporal change in the quantum state. In the example depicted in Fig. 14, it is assumed that τ_max=4τ. Therefore, it is assumed that K=4. The information processing device 100 simulates temporal change of a quantum state corresponding to each multiple of τ up to 10τ. For example, as depicted in Fig. 14, the information processing device 100 simulates a temporal change of a quantum state for each multiple of τ by applying a combination of variational quantum circuits V(θ^*_j) to |ψ>. Next, Fig. 15 is described.

Specifically, Fig. 15 depicts an example of an effect when the information processing device 100 uses the BTS method. A graph 1500 represents quantum states with respect to a time axis. A curve 1501 represents temporal change of the quantum state. In the example depicted in Fig. 15, it is assumed that τ_max=4τ. Therefore, it is assumed that K=3. The information processing device 100 simulates temporal change of a quantum state corresponding to each multiple of τ up to 10τ. For example, as depicted in Fig. 15, the information processing device 100 simulates temporal change of a quantum state for each multiple of τ by applying a combination of variational quantum circuits V(θ^*_j) to |ψ>.

Here, the number of quantum gates/the depth of the quantum circuit tends to be smaller when the ETS method is used than when the BTS method is used. Further, the number of times of generating the variational quantum circuit V(θ^*_j) tends to be smaller in the case of using the BTS method than in the case of using the ETS method. The cost necessary to generate the variational quantum circuit V(θ^*_j) in the case of using the ETS method and the cost necessary to generate the variational quantum circuit V(θ^*_j) in the case of using the BTS method are approximately the same.

For this reason, in a situation in which the accuracy of simulating the temporal change of the quantum state corresponding to each multiple of τ is likely to deteriorate, the information processing device 100 preferably uses the BTS method in order to suppress an increase in error derived from optimization. The information processing device 100 preferably uses the ETS method in which the number of quantum gates/the depth of the quantum circuit is relatively small in a situation other than a situation in which the accuracy of simulating the temporal change of the quantum state corresponding to each multiple of τ is likely to deteriorate.

Next, a first embodiment of the information processing device 100 is described with reference to Figs. 16 to 21. The first example corresponds to a case where the information processing device 100 performs the quantum many-body system simulation of the one-dimensional Heisenberg model 1600 depicted in Fig. 16.

Fig. 16 is an explanatory diagram depicting the first embodiment of the information processing device 100. In Fig. 16, a one-dimensional Heisenberg model 1600 describes the magnetic properties of a solid. The Hamiltonian H corresponding to the one-dimensional Heisenberg model 1600 is defined by the following expression (28). X_i, Y_i, and Z_i are Pauli operators for the spin i.

$$H^{(L)} = \sum_{i=1}^{L}(X_i X_{i+1} + Y_i Y_{i+1} + Z_i Z_{i+1}) \quad \dots (28)$$

The Lieb-Robinson velocity of the one-dimensional Heisenberg model 1600 satisfies v_(LR)≤12. Therefore, it is assumed that the information processing device 100 sets the compile size {L~_j} as v_(LR)=12. It is assumed that the information processing device 100 realizes a multilayer local compilation method using LVQC. In the following description, the multi-layer local compilation method using LVQC may be referred to as "ML-LVQC".

The information processing device 100 adopts a Trotter circuit U^(L)_trot obtained by the Trotter decomposition method as the target circuit U related to the time $\tau$_1=$\tau$. Here, the information processing device 100 sets the depth d_trot of the trotter circuit U^(L)_trot such that, for example, an approximation error defined by the following expression (29) becomes 1%. The trotter circuit U^(L)_trot is defined by, for example, the following expression (30). The Hamiltonian H^(L)_(odd/even) is defined by the following expression (31), for example.

$$\varepsilon = 0(L\tau^2/r) \quad \dots(29)$$

$$U_{\text{trot}}^{(L)} = \left( e^{-i(\tau/r)H_{\text{even}}^{(L)}} e^{-i(\tau/r)H_{\text{odd}}^{(L)}} \right)^r \quad \dots(30)$$

$$H_{\text{odd/even}}^{(L)} = \sum_{i \in \text{odd/even}}^{L} (X_i X_{i+1} + Y_i Y_{i+1} + Z_i Z_{i+1}) \quad \dots(31)$$

The information processing device 100 employs Variational Hamiltonian Ansatz (VHA) for the variational quantum circuit V^(L)($\theta$). The initial value $\theta$_0 of $\theta$ is defined by the following expression (32), for example. The variational quantum circuit V^(L)($\theta$) is defined by, for example, the following expression (33). d is the depth of the variational quantum circuit V^(L)($\theta$). $\theta$_(l, m) is a variational parameter. The Hamiltonian H is defined by the following expression (34), and is decomposed into a sum of mutually non-commutative terms.

$$V^{(L)}(\theta_0) = U_{\text{trot}}^{(L)} \quad \dots(32)$$

$$V^{(L)}(\theta) = \prod_{l=1}^{d} \prod_{m=1}^{M} e^{-i\theta_{l,m} H_m^{(L)}} \quad \dots(33)$$

$$H = \sum_{m=1}^{M} H_m \ ([H_m, H_{m'}] \neq 0) \quad \dots(34)$$

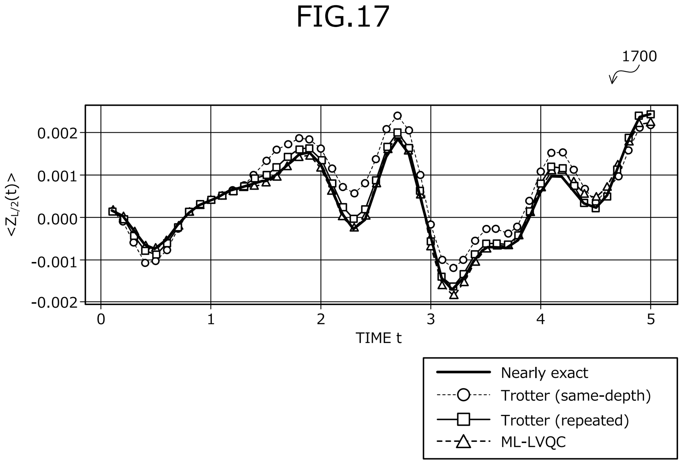

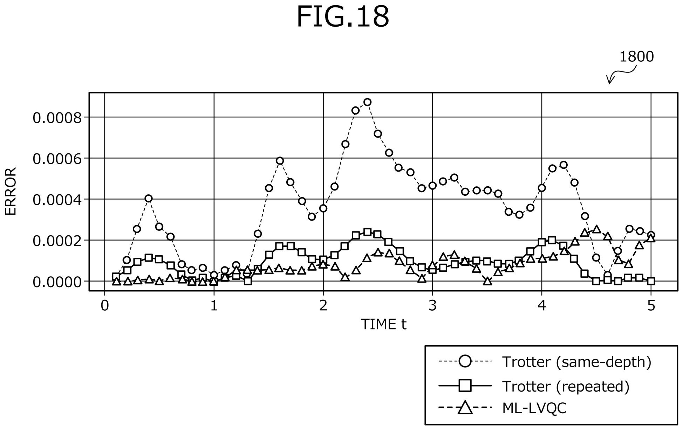

Then, the information processing device 100 uses the ETS method or the BTS method to simulate a temporal change in the quantum state |ψ> as depicted in the following expression (35), and measures the temporal change by the Pauli operator. Next, with reference to Figs. 17 and 18, an example in which the information processing device 100 verifies the accuracy when the ETS method is used in the first embodiment is described.

$$Z_{L/2}(t) = \langle\psi|e^{itH} Z_{L/2} e^{-it} |\psi\rangle \dots(35)$$

Figs. 17 and 18 are explanatory diagrams depicting an example of verification of accuracy when the ETS method in the first embodiment is used. In the example of Figs. 17 and 18, L=20. L~≤12. $\tau$=0.10. K=4. Here, d=3. {$\tau$_j}= {0.1,0.2,0.3,0.4}. {L~_j}={9,10,11,12}. Here, Fig. 17 is described.

A graph 1700 in Fig. 17 depicts temporal change of Z_(L/2)(t). Triangles in the graph 1700 represent temporal change in Z_(L/2)(t) corresponding to ML-LVQC by the information processing device 100. A thick line in the graph 1700 represents temporal change in Z_(L/2)(t) corresponding to Nearly exact. Nearly exact represents Z_(L/2)(t) treated as a correct answer.

Circles in the graph 1700 represent temporal change in Z_(L/2)(t) corresponding to Trotter (same-depth). Trotter (same-depth) means that a Trotter circuit having the same depth as the ML-LVQC is applied to the quantum state the same number of times as the ML-LVQC. Squares in the graph 1700 represent temporal changes in Z_(L/2)(t) corresponding to Trotter (repeated). Trotter (repeated) means that the Trotter circuit is applied repeatedly to the quantum state. Next, Fig. 18 is described.

A graph 1800 in Fig. 18 depicts temporal change of an error corresponding to $Z_{(L/2)}(t)$. Triangles in the graph 1800 represent temporal change of an error corresponding to ML-LVQC by the information processing device 100. Circles in the graph 1800 represent temporal change of an error corresponding to Trotter (same-depth). Squares in the graph 1800 represent temporal change of an error corresponding to Trotter (repeated).

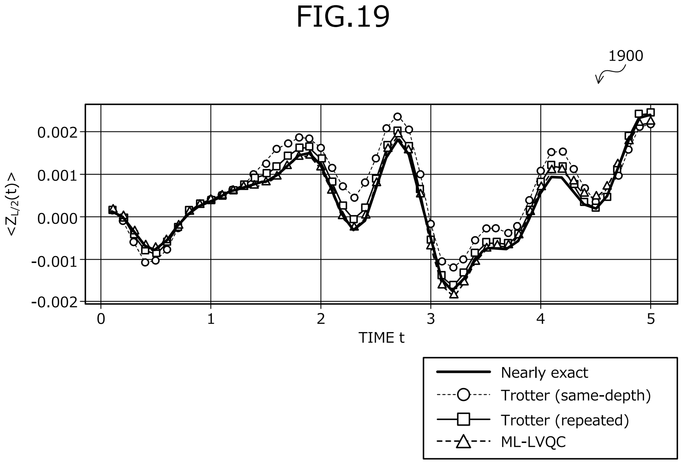

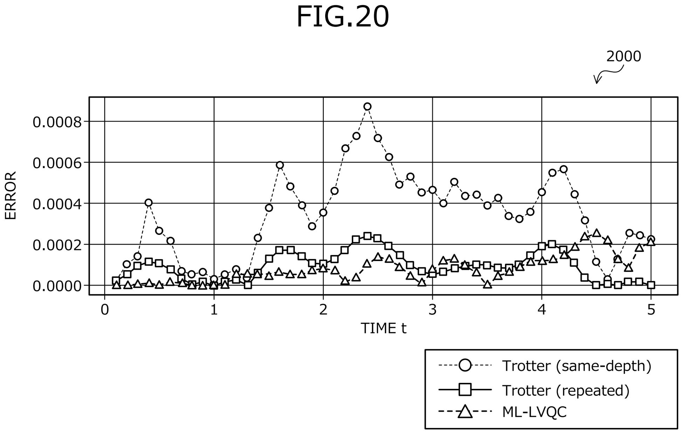

As depicted in Figs. 17 and 18, the information processing device 100 may more accurately obtain the temporal change of $Z_{(L/2)}(t)$ by the ML-LVQC than by Trotter (same-depth). In addition, the information processing device 100 may reduce the depth of the variational quantum circuit, may reduce the number of operations, and may reduce the probability of an error occurring in the qubit by the ML-LVQC as compared with the Trotter (repeated). Therefore, the information processing device 100 may easily obtain the temporal change of $Z_{(L/2)}(t)$ with high accuracy by ML-LVQC as compared with Trotter (repeated). Next, with reference to Figs. 19 and 20, an example in which the information processing device 100 verifies the accuracy when the BTS method is used in the first embodiment is described.

Figs. 19 and 20 are explanatory diagrams depicting an example of verification of accuracy when the BTS method is used in the first embodiment. In the example of Figs. 19 and 20, L=20. L~≤12. τ=0.10. K=3. Here, d=3. {τ_j}={0.1, 0.2, 0.4}. {L~_j}={9, 10, 12}. Here, the description proceeds to Fig. 19.

A graph 1900 in Fig. 19 depicts temporal change in $Z_{(L/2)}(t)$. Triangles in the graph 1900 represent temporal change in $Z_{(L/2)}(t)$ corresponding to ML-LVQC by the information processing device 100. A thick line in the graph 1900 represents temporal change in $Z_{(L/2)}(t)$ corresponding to Nearly exact. Nearly exact represents $Z_{(L/2)}(t)$ treated as a correct answer.

Circles in the graph 1900 represent temporal changes in $Z_{(L/2)}(t)$ corresponding to Trotter (same-depth). Trotter (same-depth) means that a Trotter circuit having the same depth as the ML-LVQC is applied to the quantum state the same number of times as the ML-LVQC. Squares in the graph 1900 represent temporal changes in $Z_{(L/2)}(t)$ corresponding to Trotter (repeated). Trotter (repeated) means that the Trotter circuit is applied repeatedly to the quantum state. Next, Fig. 20 is described.

A graph 2000 in Fig. 20 depicts temporal change of an error corresponding to $Z_{(L/2)}(t)$. Triangles in the graph 2000 represent temporal change of an error corresponding to ML-LVQC by the information processing device 100. Circles in the graph 2000 represent temporal change of an error corresponding to Trotter (same-depth). Squares in the graph 2000 represent temporal change of an error corresponding to Trotter (repeated).

As depicted in Figs. 19 and 20, the information processing device 100 may obtain the temporal change of $Z_{(L/2)}(t)$ more accurately by the ML-LVQC than by Trotter (same-depth). In addition, the information processing device 100 may reduce the depth of the variational quantum circuit, may reduce the number of operations, and may reduce the probability of an error occurring in the qubit by the ML-LVQC as compared with the Trotter (repeated). Therefore, the information processing device 100 may easily obtain the temporal change of $Z_{(L/2)}(t)$ with high accuracy by ML-LVQC as compared with Trotter (repeated). When the BTS method is used, the information processing device 100 may accurately obtain the temporal change of $Z_{(L/2)}(t)$ to the same extent as when the ETS method is used.

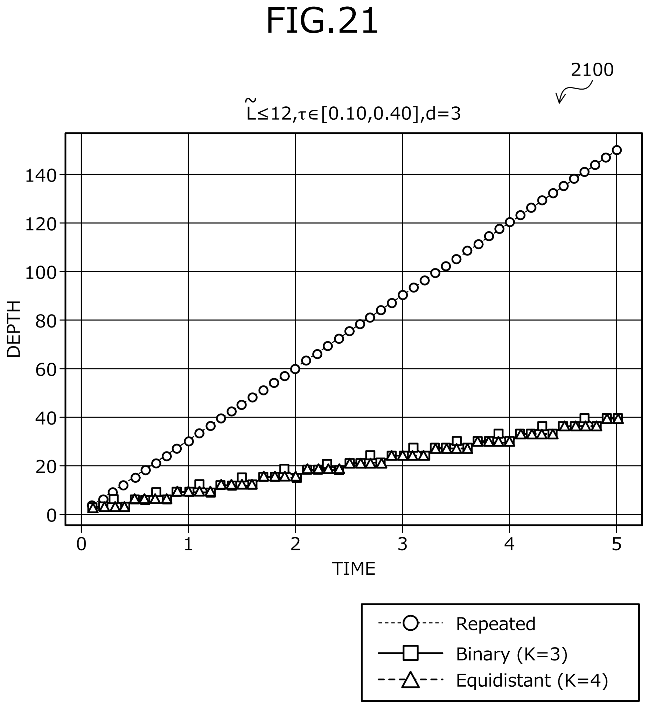

As described above, the information processing device 100 may obtain the temporal change of $Z_{(L/2)}(t)$ with higher accuracy in both cases of using the ETS method and using the BTS method than in the case of using the Trotter decomposition method. Next, an example of verifying the depth of the variational quantum circuit in the first embodiment is described with reference to Fig. 21.

Fig. 21 is an explanatory diagram depicting an example in which the depth of the variational quantum circuit is verified. A graph 2100 in Fig. 21 depicts a relationship between a time length for simulating a temporal change of a quantum state and a total depth of a variational quantum circuit. Time represents a time length. Circles in the graph 2100 correspond to repeated. "Repeated" means that the Trotter circuit is applied repeatedly to the quantum state. For the circles of the graph 2100, "Depth" specifically represents the total depth of the Trotter circuit applied to the quantum state.

Squares in the graph 2100 correspond to binary. Binary means that the information processing device 100 performs ML-LVQC using the BTS method. For the squares in the graph 2100, "Depth" specifically represents the total depth of the variational quantum circuit applied to the quantum state. Triangles in the graph 2100 correspond to Equidistant. Equidistant means that the information processing device 100 performs ML-LVQC using the ETS method. For the triangles in the graph 2100, "Depth" specifically represents the total depth of the variational quantum circuit applied to the quantum state.

As depicted in Fig. 21, when the Trotter circuit is applied repeatedly to the quantum state, there is a problem in that the total depth of the Trotter circuit applied to the quantum state proportionally increases as the time length for simulating the temporal change of the quantum state increases. On the other hand, when the information processing device 100 performs the ML-LVQC using the ETS method or the BTS method, the total depth of the variational quantum circuit may be reduced to 1/4 compared to the repeated method. Therefore, the information processing device 100 may reduce the number of operations and reduce the probability of occurrence of an error in a qubit.

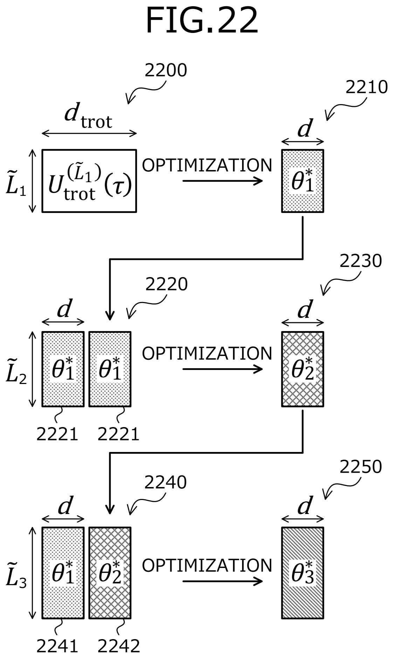

Next, a second embodiment of the information processing device 100 is described with reference to Figs. 22 to 27. Similarly to the first embodiment, the second embodiment corresponds to a case where the information processing device 100 performs the quantum many-body system simulation of the one-dimensional Heisenberg model 1600 depicted in Fig. 16.

Fig. 22 is an explanatory diagram depicting a second embodiment of the information processing device 100. In Fig. 22, the information processing device 100 employs a Trotter circuit $U^{(L)}\_trot$ obtained by the Trotter decomposition method, as the target circuit U for the time $\tau\_1=\tau$. The information processing device 100 employs VHA for the variational quantum circuit $V^{(L)}(\theta)$. The information processing device 100 performs ML-LVQC on the one-dimensional Heisenberg model 1600 using the ETS method. Further, K=3.

(22-1) The information processing device 100 sets $\tau\_1=\tau$. The information processing device 100 sets the compile size $L\sim\_1$ based on $\tau\_1$. The information processing device 100 generates a trotter circuit $U^{(L\sim\_1)}\_trot$ having the compile size $L\sim\_1$ and the depth d\_trot, and sets the trotter circuit $U^{(L\sim\_1)}\_trot$ as the first target circuit 2200.

(22-2) The information processing device 100 sets the initialized variational quantum circuit $V^{(L\sim\_1)}(\theta\_1)$. The information processing device 100 optimizes $\theta\_1$ to $\theta^{\wedge*}\_1$ so as to minimize the value of the cost function representing the difference between the first target circuit 2200 and the variational quantum circuit $V^{(L\sim\_1)}(\theta\_1)$. As a result, the information processing device 100 generates a variational quantum circuit $V^{(L\sim\_1)}(\theta^{\wedge*}\_1)$ having the depth d indicated by reference numeral 2210, which expresses the action of the time evolution operator of $\tau\_1$.

(22-3) The information processing device 100 sets $\tau\_2=2\tau$. The information processing device 100 sets the compile size $L\sim\_2$, based on $\tau\_2$. The information processing device 100 generates a variational quantum circuit $V^{(L\sim\_2)}(\theta^{\wedge*}\_1)$ indicated by reference numeral 2221, by expanding the variational quantum circuit $V^{(L\sim\_1)}(\theta^{\wedge*}\_1)$ to the compile size $L\sim\_2$ based on the parameter $\theta^{\wedge*}\_1$. The information processing device 100 concatenates two generated variational quantum circuits $V^{(L\sim\_2)}(\theta^{\wedge*}\_1)$. As a result, the information processing device 100 generates a variational quantum circuit $(V^{(L\sim\_2)}(\theta^{\wedge*}\_1))^2$ having the compile size $L\sim\_2$ and the depth 2d, and sets the variational quantum circuit as the second target circuit 2220.

(22-4) The information processing device 100 sets the initialized variational quantum circuit $V^{(L\sim\_2)}(\theta\_2)$. The information processing device 100 optimizes $\theta\_2$ to $\theta^{\wedge*}\_2$ so as to minimize the value of the cost function representing the difference between the second target circuit 2220 and the variational quantum circuit $V^{(L\sim\_2)}(\theta\_2)$. As a result, the information processing device 100 generates a variational quantum circuit $V^{(L\sim\_2)}(\theta^{\wedge*}\_2)$ having the depth d indicated by reference numeral 2230, which expresses the action of the time evolution operator of $\tau\_2$.

(22-5) The information processing device 100 sets $\tau\_3=3\tau$. The information processing device 100 sets the compile size $L\sim\_3$ based on $\tau\_3$. The information processing device 100 generates a variational quantum circuit $V^{(L\sim\_3)}(\theta^{\wedge*}\_1)$ indicated by reference numeral 2241 by expanding the variational quantum circuit $V^{(L\sim\_1)}(\theta^{\wedge*}\_1)$ to the compile size $L\sim\_3$ based on the parameter $\theta^{\wedge*}\_1$. The information processing device 100 generates a variational quantum circuit $V^{(L\sim\_3)}(\theta^{\wedge*}\_2)$ indicated by reference numeral 2242 by expanding the variational quantum circuit $V^{(L\sim\_2)}(\theta^{\wedge*}\_2)$ to the compile size $L\sim\_3$ based on the parameter $\theta^{\wedge*}\_2$.

The information processing device 100 concatenates the generated variational quantum circuit $V^{(L\sim\_3)}(\theta^{\wedge*}\_1)$ and the generated variational quantum circuit $V^{(L\sim\_3)}(\theta^{\wedge*}\_2)$. As a result, the information processing device 100 generates a variational quantum circuit $V^{(L\sim\_3)}(\theta^{\wedge*}\_1) V^{(L\sim\_3)}(\theta^{\wedge*}\_2)$ having the compile size $L\sim\_3$ and the depth 2d, and sets the variational quantum circuit $V^{(L\sim\_3)}(\theta^{\wedge*}\_1) V^{(L\sim\_3)}(\theta^{\wedge*}\_2)$ as the third target circuit 2240.

(22-6) The information processing device 100 sets the initialized variational quantum circuit $V^{(L\sim\_3)}(\theta\_3)$. The information processing device 100 optimizes $\theta\_3$ to $\theta^{\wedge*}\_3$ so as to minimize the value of the cost function representing the difference between the third target circuit 2240 and the variational quantum circuit $V^{(L\sim\_3)}(\theta\_3)$. As a result, the information processing device 100 generates a variational quantum circuit $V^{(L\sim\_3)}(\theta^{\wedge*}\_3)$ having the depth d indicated by reference numeral 2250, which expresses the action of the time evolution operator of $\tau\_3$ minutes.

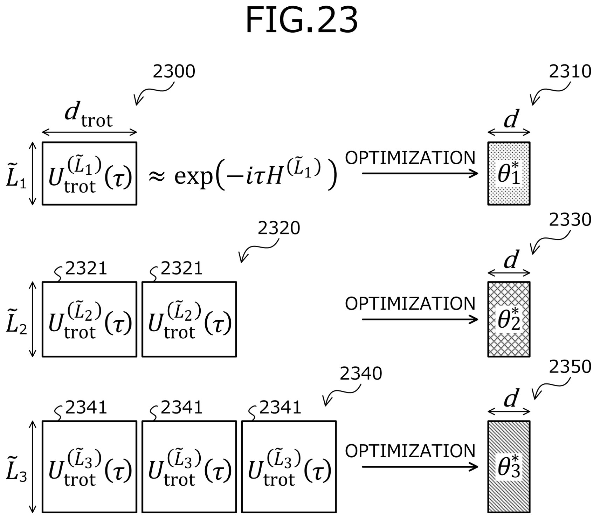

As described above, the information processing device 100 may prepare multiple variational quantum circuits $V^{(L\sim\_j)}(\theta^{\wedge*}\_j)$ each having the depth d and representing the action of the time evolution operator for the j-th time having different lengths, by the ML-LVQC. On the other hand, another method of preparing multiple variational quantum circuits $V^{(L\sim\_1)\_j)}(\theta^{\wedge*}\_j)$ by overlapping Trotter circuits is assumed and compared with ML-LVQC. First, an example of the other method is described with reference to Fig. 23.

Fig. 23 is an explanatory diagram depicting an example of the other method for comparison with ML-LVQC. In the following description, the other method for comparison with ML-LVQC may be referred to as "method A".

In Fig. 23, in the method A, a combinational circuit obtained by concatenating j Trotter circuits $U^{(L\sim\_j)}\_trot$ having a compile size $L\sim\_j$ is set as a target circuit U, and a variational quantum circuit $V^{(L\sim\_j)}(\theta^{\wedge*}\_j)$ is generated. The depth of the trotter circuit $U^{(L\sim\_j)}\_trot$ is d\_trot. The depth of the combinational circuit is $j\times d\_trot$.

(23-1) The method A sets $\tau\_1=\tau$. The method A sets the compile size $L\sim\_1$, based on $\tau\_1$. In the method A, a trotter circuit $U^{(L\sim\_1)}\_trot$ having the compile size $L\sim\_1$ and the depth d\_trot is generated and set as the first target circuit 2300. The method A sets the initialized variational quantum circuit $V^{(L\sim\_1)}(\theta\_1)$. The method A optimizes $\theta\_1$ to $\theta^{\wedge*}\_1$ so as to minimize a value of a cost function representing a difference between the first target circuit 600 and the variational quantum circuit $V^{(L\sim\_1)}(\theta\_1)$. As a result, the method A generates a variational quantum circuit $V^{(L\sim\_1)}(\theta^{\wedge*}\_1)$ having the depth d indicated by reference numeral 2310, which expresses the action of the time evolution operator of $\tau\_1$ minutes.

(23-2) The method A sets $\tau\_2=2\tau$. The method A sets the compile size $L\sim\_2$ based on $\tau\_2$. The method A generates a trotter circuit U^(L~_2)_trot indicated by reference numeral 2321, having the compile size L~_2 and the depth d_trot. In the method A, two Trotter circuits U^(L~_2)_trot are concatenated. As a result, the method A generates a combinational circuit (U^(L~_2)_trot)^2 having the compile size L~_2 and a depth 2d_trot, and sets the combinational circuit as the second target circuit 2320. The method A sets the initialized variational quantum circuit V^(L~_2)(θ_2). The method A optimizes θ_2 to θ^*_2 so as to minimize the value of the cost function representing the difference between the second target circuit 2320 and the variational quantum circuit V^(L~_2)(θ_2). As a result, the method A generates a variational quantum circuit V^(L~_2)(θ^*_2) having the depth d indicated by reference numeral 2330, which expresses the action of the time evolution operator of τ_2.

(23-3) Method A sets τ_3=3τ. The method A sets the compile size L~_3 based on τ_3. The method A generates a trotter circuit U^(L~_3)_trot indicated by reference numeral 2341, which has the compile size L~_3 and the depth d_trot. In the method A, three Trotter circuits U^(L~_3)_trot are concatenated. As a result, the method A generates a combinational circuit (U^(L~_3)_trot)^3 having the compile size L~_3 and a depth 3d_trot, and sets the combinational circuit as the third target circuit 2340. The method A sets the initialized variational quantum circuit V^(L~_3)(θ_3). The method A optimizes θ_3 to θ^*_3 so as to minimize the value of the cost function representing the difference between the third target circuit 2340 and the variational quantum circuit V^(L~_3)(θ_3). As a result, the method A generates a variational quantum circuit V^(L~_3)(θ^*_3) having the depth d indicated by reference numeral 2350, which expresses the action of the time evolution operator of τ_3 minutes.

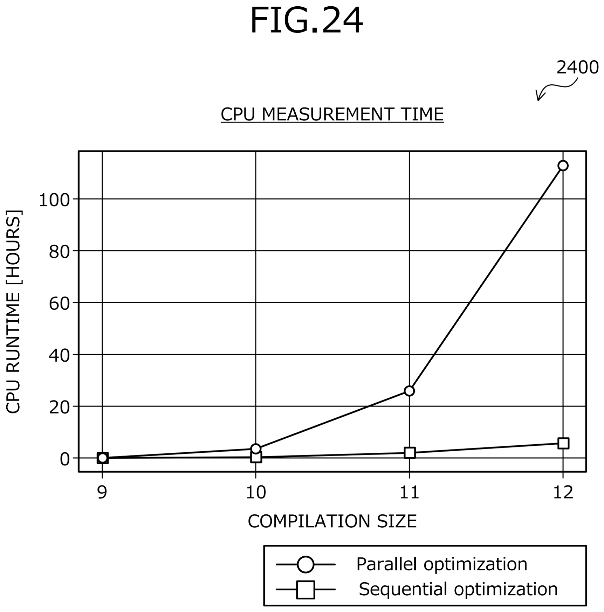

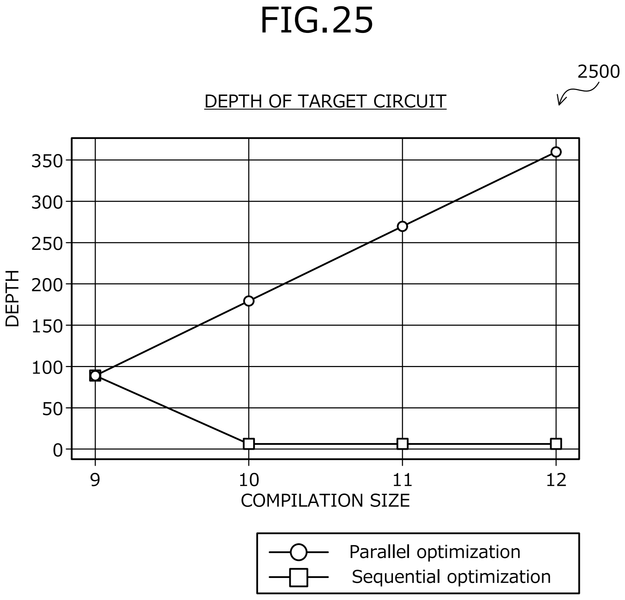

Here, the ML-LVQC and the method A are compared with each other using Figs. 24 and 25, and the cost necessary to generate the variational quantum circuit V^(L~_j)(θ^*_j) is verified. The cost is, for example, a CPU calculation time necessary to generate the variational quantum circuit V^(L~_j)(θ^*_j). The cost is the depth of the j-th target circuit necessary to generate the variational quantum circuit V^(L~_j)(θ^*_j).

Figs. 24 and 25 are explanatory diagrams depicting an example of cost verification in the second embodiment. In the example of Figs. 24 and 25, L=20. L~≤12. τ=0.10. K=4. Here, d=3. {τ_j}={0.1, 0.2, 0.3, 0.4}. {L~_j}={9, 10, 11, 12}.

In Fig. 24, a graph 2400 represents the relationship between the compile size L~ and the CPU calculation time. Parallel optimization corresponds to a case where the method A is performed by a classical computer. Sequential optimization corresponds to a case where ML-LVQC is performed by a classical computer. The ML-LVQC is performed by, for example, the information processing device 100.

As depicted in Fig. 24, by performing the ML-LVQC, the information processing device 100 may reduce the CPU calculation time corresponding to each compile size L~_j to 1/9 to 1/20 as compared with the method A. Next, Fig. 25 is described.

In Fig. 25, a graph 2500 represents a relationship between the compile size L~ and the depth of the j-th target circuit. Parallel optimization corresponds to a case where the method A is implemented by a hybrid of a classical computer and an actual quantum computer. Sequential optimization corresponds to a case where ML-LVQC is performed by a hybrid of a classical computer and an actual quantum computer. The ML-LVQC is performed by, for example, the information processing device 100 and the computing device 201.

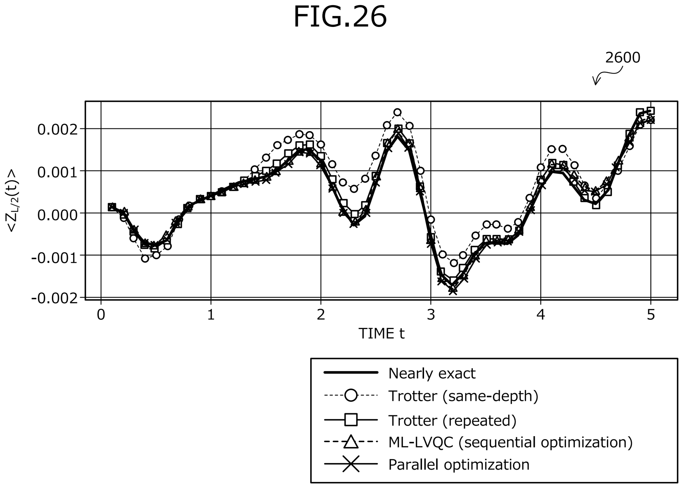

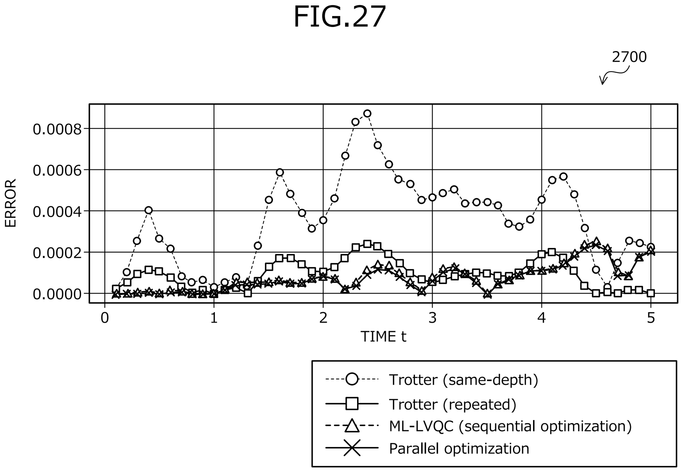

As depicted in Fig. 25, the information processing device 100 may reduce the depth of the j-th target circuit corresponding to each compile size L~_j to 1/30 to 1/60 as compared to the method A by performing ML-LVQC in cooperation with the computing device 201. Next, with reference to Figs. 26 and 27, an example in which the information processing device 100 verifies the accuracy when the ETS method is used in the second embodiment is described.

Figs. 26 and 27 are explanatory diagrams depicting an example of verification of accuracy when the ETS method is used in the second embodiment. In the example depicted in Figs. 26 and 27, L=20. L~≤12. τ=0.10. K=4. Here, d=3. {τ_j}= {0.1, 0.2, 0.3, 0.4}. {L~_j}={9, 10, 11, 12}. Here, Fig. 26 is described.

A graph 2600 in Fig. 26 depicts temporal change of Z_(L/2)(t). Triangles in the graph 2600 represent temporal change in Z_(L/2)(t) corresponding to ML-LVQC by the information processing device 100. Cross marks in the graph 2600 represent temporal change in Z_(L/2)(t) corresponding to the above-described parallel optimization. A thick line in the graph 2600 represents temporal change in Z_(L/2)(t) corresponding to Nearly exact. Nearly exact represents Z_(L/2)(t) treated as a correct answer.

Circles in the graph 2600 represent temporal change in Z_(L/2)(t) corresponding to Trotter (same-depth). Trotter (same-depth) means that a Trotter circuit having the same depth as the ML-LVQC is applied to the quantum state the same number of times as the ML-LVQC. Squares in the graph 2600 represent temporal change in Z_(L/2)(t) corresponding to Trotter (repeated). Trotter (repeated) means that the Trotter circuit is applied repeatedly to the quantum state. Next, Fig. 27 is described.

A graph 2700 in Fig. 27 depicts temporal change of an error corresponding to Z_(L/2)(t). Triangles in the graph 2700 represent temporal change of an error corresponding to ML-LVQC by the information processing device 100. Cross marks in the graph 2700 represent temporal change of an error corresponding to the above-described parallel optimization. Circles in the graph 2700 represent temporal change of an error corresponding to Trotter (same-depth). Squares in the graph 2700 represent temporal changes in errors corresponding to Trotter (repeated).

As depicted in Figs. 26 and 27, the information processing device 100 may obtain the temporal change of Z_(L/2)(t) more accurately by the ML-LVQC than by Trotter (same-depth). Further, the information processing device 100 may reduce the depth of the variational quantum circuit by ML-LVQC as compared with Trotter (repeated). The number of operations may be reduced, and the probability of occurrence of an error in a qubit may be reduced. Therefore, the information processing device 100 may easily obtain the temporal change of $Z_{(L/2)}(t)$ with high accuracy by ML-LVQC as compared with Trotter (repeated).

In addition, the information processing device 100 may accurately obtain the temporal change of $Z_{(L/2)}(t)$ by the ML-LVQC to the same extent as the parallel optimization described above. At this time, the information processing device 100 may reduce the CPU calculation time necessary to generate the variational quantum circuit by the ML-LVQC as compared with the parallel optimization described above.

As described above, the information processing device 100 may prepare the variational quantum circuit for efficiently performing the quantum many-body system simulation for simulating the temporal change of the quantum state over a relatively long period of time by an actual quantum computer. The information processing device 100 may reduce the number of quantum gates/the depth of the quantum circuit when the quantum many-body system simulation for simulating the temporal change of the quantum state over a relatively long period of time is performed by the prepared variational quantum circuit.

For example, the information processing device 100 may efficiently perform the quantum many-body system simulation on the one-dimensional Heisenberg model 1600. At this time, the information processing device 100 may suppress the number of quantum gates/the depth of the quantum circuit to 1/4, for example, as compared with a case where the variational quantum circuit is prepared by the Trotter decomposition method. For example, the information processing device 100 may reduce the processing time necessary to perform the quantum many-body system simulation to 1/16.

Further, the information processing device 100 may reduce the cost necessary for preparing the variational quantum circuit while maintaining the accuracy of the quantum many-body system simulation as compared with the parallel optimization described above. For example, the information processing device 100 may reduce the CPU calculation time necessary for preparing the variational quantum circuit to 1/4. For example, the information processing device 100 may suppress the depth of the target circuit set when preparing the variational quantum circuit to 1/60.

Here, while a case where the information processing device 100 sequentially generates the variational quantum circuit $V^{(L\sim\_j)}(\theta\_j)$ with the compile size $L\sim\_j$ according to $\tau\_j$ has been described, the present disclosure is not limited hereto. For example, the information processing device 100 may sequentially generate variational quantum circuits $V^{(L\sim\_K)}(\theta\_j)$ with a common compile size $L\sim\_K$. In this case, when generating the variational quantum circuit $V^{(L\sim\_K)}(\theta\_j)$, the information processing device 100 may omit adjustment of the compile size $L\sim\_j$ of the generated variational quantum circuit $V^{(L\sim\_K)}(\theta\_{(j-1)})$ or the like.

Next, an example of a procedure of a first generation process executed by the information processing device 100 is described with reference to Fig. 28. The first generation process corresponds to a case where the information processing device 100 uses the ETS. The first generation process is implemented by, for example, the CPU 301, the storage area such as the memory 302 or the recording medium 305, and the network I/F 303 depicted in Fig. 3.

Fig. 28 is a flowchart depicting an example of a procedure of the first generation process. In Fig. 28, the information processing device 100 obtains $H^{(L)}$, $\tau$, and $V^{(L)}(\theta)$(step S2801). The information processing device 100 determines K and $\{L\sim\_j\}$ based on $H^{(L)}$ and $\tau$ (step S2802).

The information processing device 100 sets the Trotter circuit having the size $L\sim\_1$ as the target circuit and optimizes $V^{(L\sim\_1)}(\theta\_1)$ based on $V^{(L)}(\theta)$(step S2803). The information processing device 100 sets j to 2 (step S2804).

The information processing device 100 sets $V^{(L\sim\_j)}(\theta^{\wedge*}\_{(j-1)})V^{(L\sim\_j)}(\theta^{\wedge*}\_1)$ expanded to the size $L\sim\_j$, as the target circuit, and optimizes $V^{(L\sim\_j)}(\theta\_j)$ based on $V^{(L)}(\theta)$(step S2805).

The information processing device 100 determines whether $j \geq K$ is satisfied (step S2806). Here, when $j \geq K$ is true (step S2806: YES), the information processing device 100 proceeds to the process at step S2808. On the other hand, when not $j \geq K$ but $j < K$ is true (step S2806: NO), the information processing device 100 proceeds to the process at step S2807.

At step S2807, the information processing device 100 increments j (step S2807), and returns to the process at step S2805. At step S2808, the information processing device 100 outputs $\{\theta^{\wedge*}\_j\}$ (step S2808), and ends the first generation process.

Next, an example of a procedure of a first calculation process executed by the information processing device 100 is described with reference to Fig. 29. The first calculation process corresponds to a case where the information processing device 100 uses the ETS. The first calculation process is implemented by, for example, the CPU 301, the storage area such as the memory 302 or the recording medium 305, and the network I/F 303 depicted in Fig. 3.

Fig. 29 is a flowchart depicting an example of a procedure of the first calculation process. In Fig. 29, the information processing device 100 obtains $\{\theta^{\wedge*}\_j\}$, N, and $|\psi\rangle$ (step S2901). The information processing device 100 sets k to 1 (step S2902).

The information processing device 100 applies $V^{(L)}(\theta^{\wedge*}\_n)(V^{(L)}(\theta^{\wedge*}\_K))^{\wedge m}$ to $|\psi\rangle$, where n=(k)mod (K) and m=[k/K] (step S2903). The information processing device 100 measures an expected value of a physical quantity (step S2904).

The information processing device 100 determines whether k≥K is satisfied (step S2905). Here, when not k≥K but k<K is true (step S2905: NO), the information processing device 100 increments k (step S2906) and returns to the process at step S2903. On the other hand, when k≥K is satisfied (step S2905: YES), the information processing device 100 ends the first calculation process.

Next, an example of a procedure of a second generation process executed by the information processing device 100 is described with reference to Fig. 30. The second generation process corresponds to a case where the information processing device 100 uses the BTS. The second generation processing is implemented by, for example, the CPU 301, the storage area such as the memory 302 or the recording medium 305, and the network I/F 303 depicted in Fig. 3.

Fig. 30 is a flowchart depicting an example of a procedure of the second generation process. In Fig. 30, the information processing device 100 obtains $H^{\wedge}(L)$, $\tau$, and $V^{\wedge}(L)(\theta)$(step S3001). The information processing device 100 determines K and $\{L\sim\_j\}$ based on $H^{\wedge}(L)$ and $\tau$ (step S3002).

The information processing device 100 sets the Trotter circuit having the size $L\sim\_1$ as the target circuit and optimizes $V^{\wedge}(L\sim\_1)(\theta\_1)$ based on $V^{\wedge}(L)(\theta)$(step S3003). The information processing device 100 sets j to 2 (step S3004).

The information processing device 100 sets $(V^{\wedge}(L\sim\_j)(\theta^{\wedge *}\_ (j-1)))^{\wedge}2$ expanded to the size $L\sim\_j$ as the target circuit, and optimizes $V^{\wedge}(L\sim\_j)(\theta\_j)$ based on $V^{\wedge}(L)(\theta)$(step S3005).

The information processing device 100 determines whether j≥K is satisfied (step S3006). Here, when j≥K is satisfied (step S3006: YES), the information processing device 100 proceeds to the process at step S3008. On the other hand, when not j≥K but j<K is true (step S3006: NO), the information processing device 100 proceeds to the process at step S3007.

At step S3007, the information processing device 100 increments j (step S3007), and returns to the process at step S3005. At step S3008, the information processing device 100 outputs $\{\theta^{\wedge *}\_j\}$ (step S3008), and ends the second generation process.

Next, an example of a procedure of a second calculation process executed by the information processing device 100 is described with reference to Fig. 31. The second calculation process corresponds to a case where the information processing device 100 uses the BTS. The second calculation process is implemented by, for example, the CPU 301, the storage area such as the memory 302 or the recording medium 305, and the network I/F 303 depicted in Fig. 3.

Fig. 31 is a flowchart depicting an example of the procedure of the second calculation process. In Fig. 31, the information processing device 100 obtains $\{\theta^{\wedge *}\_j\}$, N, and $|\psi>$ (step S3101). The information processing device 100 sets k to 1 (step S3102).

The information processing device 100 decomposes $k=\Sigma^{\wedge}K\_(j=1)((n\_j)(2^{\wedge}(j-1)))$, where $n\_j=[(N-\Sigma^{\wedge}K\_(l>j)((n\_l)(2^{\wedge}(l-1))))/(2^{\wedge}(j-1))]$ (step S3103).

The information processing device 100 applies $\Pi^{\wedge}K\_(j=1)(V^{\wedge}(L)(\theta^{\wedge *}\_j))^{\wedge}(n\_j)$ to $|\psi>$ (step S3104). The information processing device 100 measures an expected value of a physical quantity (step S3105).

The information processing device 100 determines whether k≥K is satisfied (step S3106). Here, when not k≥K but k<K is true (step S3106: NO), the information processing device 100 increments k (step S3107) and returns to the process at step S3104. On the other hand, when k≥K is satisfied (step S3106: YES), the information processing device 100 ends the second calculation process.

The information processing device 100 may be applied when performing quantum many-body system simulation in the field of material development, drug discovery research, or the like. Specifically, the information processing device 100 may be applied when generating a quantum circuit expressing the action of a time evolution operator. Accordingly, the information processing device 100 may maintain the accuracy of specific calculation processing such as quantum chemical calculation or material physical property calculation in quantum many-body system simulation.

As described above, according to the information processing device 100, the quantum circuit expressing the action of the time evolution operator for the first time period may be set as the first target. According to the information processing device 100, by the local compilation method, it is possible to generate the first quantum circuit that expresses the action of the time evolution operator for the first time period and has a depth smaller than that of the quantum circuit as the first target. According to the information processing device 100, it is possible to set, as the second target, a quantum circuit that is obtained by combining two or more generated first quantum circuits and expresses the action of the time evolution operator for the second time period longer than the first time period. According to the information processing device 100, it is possible to generate the second quantum circuit that expresses the action of the time evolution operator for the second time period and has a depth smaller than that of the second target quantum circuit, by the local compilation method. As a result, the information processing device 100 may efficiently generate a second quantum circuit having a suppressed depth. The information processing device 100 may easily reduce the processing time necessary for simulating the temporal change of the quantum state for the time equal to or longer than the second time period by using the first quantum circuit and the second quantum circuit.

According to the information processing device 100, it is possible to set, as the second target, a quantum circuit that is obtained by combining two first quantum circuits and that expresses an action of a time evolution operator for a second time period that is twice the first time period. According to the information processing device 100, it is possible to generate the second quantum circuit that expresses the action of the time evolution operator for the second time period and that has a depth smaller than that of the second target quantum circuit by the local compilation method. As a result, the information processing device 100 may generate a quantum circuit for which the depth thereof is suppressed and that expresses the action of the time evolution operator for the second time period, which is twice the first time period. The information processing device 100 may express the action of the time evolution operator for the second time period with a relatively small number of quantum gates.

According to the information processing device 100, it is possible to set, as the third target, a quantum circuit that is obtained by combining a first quantum circuit and a second quantum circuit generated immediately before the first quantum circuit and expresses an action of a time evolution operator for a time longer than the second quantum circuit by the first time period. According to the information processing device 100, it is possible to newly generate the second quantum circuit that expresses the action of the time evolution operator for the time and has a depth smaller than that of the quantum circuit as the third target by the local compilation method. According to the information processing device 100, the process of setting the third target and newly generating the second quantum circuit may be repeatedly executed until a predetermined condition is satisfied. As a result, the information processing device 100 may generate a quantum circuit that has a suppressed depth and expresses an action of a time evolution operator for each of multiple time periods, each of which is a multiple of the first time period. By combining the generated quantum circuits, the information processing device 100 may express the action of the time evolution operator for a relatively long time with a relatively small number of quantum gates.

According to the information processing device 100, it is possible to set, as the third target, a quantum circuit that is obtained by combining two second quantum circuits generated immediately before and expresses an action of a time evolution operator for a time twice as long as that for the second quantum circuit. According to the information processing device 100, it is possible to newly generate the second quantum circuit that expresses the action of the time evolution operator for the time and has a depth smaller than that of the quantum circuit as the third target by the local compilation method. According to the information processing device 100, the process of setting the third target and newly generating the second quantum circuit may be repeatedly executed until a predetermined condition is satisfied. As a result, the information processing device 100 may generate a quantum circuit that has a suppressed depth and expresses an action of a time evolution operator for each of multiple time periods, each of which is a multiple of the first time period. By combining the generated quantum circuits, the information processing device 100 may express the action of the time evolution operator for a relatively long time with a relatively small number of quantum gates.

According to the information processing device 100, it is possible to selectively combine multiple quantum circuits from a quantum circuit set including a first quantum circuit and a generated second quantum circuit to thereby generate a quantum circuit expressing an action of a time evolution operator for a time longer than that of the second quantum circuit generated immediately before. According to the information processing device 100, the generated quantum circuit may be set as the third target. According to the information processing device 100, it is possible to newly generate the second quantum circuit that expresses the action of the time evolution operator for the time and that has a depth smaller than that of the quantum circuit, as the third target by the local compilation method. According to the information processing device 100, the process of setting the third target and newly generating the second quantum circuit may be repeatedly executed until a predetermined condition is satisfied. As a result, the information processing device 100 may generate a quantum circuit that has a suppressed depth and expresses an action of a time evolution operator for each of multiple time periods, each of which is a multiple of the first time period. By combining the generated quantum circuits, the information processing device 100 may express the action of the time evolution operator for a relatively long time with a relatively small number of quantum gates.

According to the information processing device 100, it is possible to set, as the first target, the quantum circuit representing the action of the time evolution operator for the first time period obtained by the Trotter decomposition method. According to the information processing device 100, it is possible to generate, as the first target, the first quantum circuit that expresses the action of the time evolution operator for the first time period and has a depth smaller than that of the quantum circuit, by the local compilation method. Accordingly, the information processing device 100 may appropriately set the first target.

According to the information processing device 100, it is possible to set, as a predetermined condition, that the second quantum circuit expressing the action of the time evolution operator for the maximum time among multiples of the first time period included in the time range in which the action of the time evolution operator may be expressed is newly generated. Thus, the information processing device 100 may generate multiple second quantum circuits that are possible to generate. The information processing device 100 may easily express the action of the time evolution operator for a relatively long time by using the generated second quantum circuit.

According to the information processing device 100, it is possible to set, as a predetermined condition, that the second quantum circuit representing the action of the time evolution operator for the maximum time among multiples of powers of 2 of the first time period included in the time range in which the action of the time evolution operator may be represented is newly generated. Thus, the information processing device 100 may generate multiple second quantum circuits that are possible to generate. The information processing device 100 may easily express the action of the time evolution operator for a relatively long time by using the generated second quantum circuit.

According to the information processing device 100, it is possible to set, as the second target, a quantum circuit that is obtained by expanding the first quantum circuit to a size corresponding to the second time period that is twice the first time period and then combining two first quantum circuits and that expresses the action of the time evolution operator for the second time period. According to the information processing device 100, it is possible to generate the second quantum circuit that expresses the action of the time evolution operator for the second time period and that has a depth smaller than that of the second target quantum circuit, by the local compilation method. Accordingly, the information processing device 100 may appropriately generate the second quantum circuit and may set the second target having an appropriate size.

According to the information processing device 100, the first quantum circuit and the second quantum circuit generated immediately before the first quantum circuit are expanded to a size corresponding to a time longer than that of the second quantum circuit by the first time period, and then combined to generate a quantum circuit expressing the action of the time evolution operator for the time. According to the information processing device 100, the generated quantum circuit may be set as the third target. According to the information processing device 100, it is possible to newly generate the second quantum circuit that expresses the action of the time evolution operator for the time and has a depth smaller than that of the quantum circuit, as the third target, by the local compilation method. Accordingly, the information processing device 100 may set the third target having an appropriate size, and may appropriately generate the second quantum circuit.

According to the information processing device 100, it is possible to set, as the third target, a quantum circuit that is obtained by expanding the second quantum circuit generated immediately before to a size corresponding to a time twice as long as that for the second quantum circuit and combining two second quantum circuits and that expresses the action of the time evolution operator for the time. According to the information processing device 100, it is possible to newly generate the second quantum circuit that expresses the action of the time evolution operator for the time and has a depth smaller than that of the quantum circuit, as the third target, by the local compilation method. Accordingly, the information processing device 100 may set the third target having an appropriate size, and may appropriately generate the second quantum circuit.

According to the information processing device 100, it is possible to selectively combine multiple quantum circuits from a quantum circuit set including the first quantum circuit and the generated second quantum circuit to thereby generate a quantum circuit expressing an action of a time evolution operator for a predetermined time. According to the information processing device 100, it is possible to simulate the temporal change of the quantum state for the time based on the generated quantum circuit. Thus, the information processing device 100 may accurately and efficiently simulate the temporal change of the quantum state for a predetermined time.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a depicting of the superiority and inferiority of the invention. Although one or more embodiments of the present invention have been described in detail, it should be understood that the various changes, substitutions, and alterations could be made hereto without departing from the spirit and scope of the invention.

**Claims**

1.  An information processing program for causing a computer to execute a process, the process comprising:

    generating a plurality of first quantum circuits by a local compilation method, the first quantum circuits representing an action of a time evolution operator for a first time period and having a depth smaller than a depth of a first target quantum circuit representing the action of the time evolution operator for the first time period; and
    generating a second quantum circuit by the local compilation method, the second quantum circuit being smaller in depth than a second target quantum circuit obtained by combining two or more of the generated first quantum circuits and representing the action of the time evolution operator for a second time period longer than the first time period, the second quantum circuit representing the action of the time evolution operator for the second time period.

2. The information processing program according to claim 1, wherein
the second time period is two times longer than the first time period.

3. The information processing program according to claim 1 or claim 2, the process further comprising:

obtaining a third target quantum circuit by combining the first quantum circuit and the second quantum circuit generated immediately before, the third target quantum circuit representing the action of the time evolution operator for a third time period longer than the second quantum circuit by the first time period; and
newly generating, by the local compilation method, the second quantum circuit smaller in depth than the third target quantum circuit and representing the action of the time evolution operator for the third time period, wherein the obtaining the third target quantum circuit and the newly generating the second quantum circuit are repeatedly executed until a condition is satisfied.

4. The information processing program according to claim 1 or claim 2, further comprising:

obtaining a third target quantum circuit by combining two of the second quantum circuits that are generated immediately before and represent the action of the time evolution operator for a third time period that is twice as long as the second quantum circuit; and
newly generating, by the local compilation method, the second quantum circuit that is smaller in depth than the third target quantum circuit and represents the action of the time evolution operator for the third time period, wherein
the obtaining the third target quantum circuit and the newly generating the second quantum circuit are repeatedly executed until a predetermined condition is satisfied.

5. The information processing program according to any one of claims 1 to 4, the process further comprising newly generating the second quantum circuit by the local compilation method, the newly generated second quantum circuit being smaller in depth than a third target quantum circuit, the newly generated second quantum circuit being obtained by selectively combining a plurality of quantum circuits from a quantum circuit set including the first quantum circuits and the generated second quantum circuit, the third target quantum circuit representing the action of the time evolution operator for a third time period longer than the second quantum circuit generated immediately before, wherein the newly generating the second quantum circuit is repeatedly executed until a condition is satisfied.

6. The information processing program according to any one of claims 1 to 5, wherein the generating the first quantum circuit includes obtaining, by a Trotter decomposition method, the first target quantum circuits representing the action of the time evolution operator for the first time period.

7. The information processing program according to claim 3, the condition is that the newly generated second quantum circuit is generated according to a local compilation theorem, represents the action of the time evolution operator for a maximum one of a plurality of multiples of the first time period, and is included in a time domain representing the action of the time evolution operator.

8. The information processing program according to claim 4, wherein the predetermined condition is that the newly generated second quantum circuit is generated according to a local compilation theorem, represents the action of the time evolution operator for a maximum one of a plurality of multiples of a power of 2 of the first time period, and is included in a time domain representing the action of the time evolution operator.

9. The information processing program according to any one of claims 1 to 8, wherein
the generating the first quantum circuits includes expanding each to a size corresponding to the second time period that is two times the first period, and
the generating the second quantum circuit includes obtaining the second target quantum circuit by combining two of the expanded first quantum circuits and generating the second quantum circuit by the local compilation method, the second quantum circuit being smaller in depth than the second target quantum circuit and representing the action of the time evolution operator for the second time period.

10. The information processing program according to claim 3, wherein

the generating the first quantum circuits includes expanding each to a size corresponding to a third time period longer than the second time period by the first period, and

the newly generating the second quantum circuit includes expanding the second quantum circuit generated immediately before to the size corresponding to the third time period, combining one of the expanded first quantum circuits and the expanded second quantum circuit to obtain a third target quantum circuit representing the action of the time evolution operator for the third time period, and newly generating the second quantum circuit by the local compilation method, the newly generated second quantum circuit being smaller in depth than the third target quantum circuit and representing the action of the time evolution operator for the third time period.

11. The information processing program according claim 4, wherein

the newly generating the second quantum circuit includes expanding the second quantum circuit generated immediately before to a size corresponding to a third time period two times longer than the second time period, combining two expanded second quantum circuits to obtain a third target quantum circuit representing the action of the time evolution operator for the third time period, and newly generating the second quantum circuit by the local compilation method, the newly generated second quantum circuit being smaller in depth than the third target quantum circuit and representing the action of the time evolution operator for the third time period.

12. The information processing program according to any one of claims 1 to 11, the process further comprising selectively combining a plurality of quantum circuits from a set including the first quantum circuits and each generated second quantum circuit and thereby obtaining a quantum circuit representing the action of the time evolution operator for a time period, and simulating a temporal change of a quantum state for the time period, based on the obtained quantum circuit.

13. An information processing method executed by a computer, the method comprising:

generating a plurality of first quantum circuits by a local compilation method, the first quantum circuits representing an action of a time evolution operator for a first time period and having a depth smaller than a depth of a first target quantum circuit representing the action of the time evolution operator for the first time period; and

generating a second quantum circuit by the local compilation method, the second quantum circuit being smaller in depth than a second target quantum circuit obtained by combining two or more of the generated first quantum circuits and representing the action of the time evolution operator for a second time period longer than the first time period, the second quantum circuit representing the action of the time evolution operator for the second time period.

14. An information processing device, comprising:

a memory;
a processor coupled to the memory, the processor configured to:

generate a plurality of first quantum circuits by a local compilation method, the first quantum circuits representing an action of a time evolution operator for a first time period and having a depth smaller than a depth of a first target quantum circuit representing the action of the time evolution operator for the first time period; and

generate a second quantum circuit by the local compilation method, the second quantum circuit being smaller in depth than a second target quantum circuit obtained by combining two or more of the generated first quantum circuits and representing the action of the time evolution operator for a second time period longer than the first time period, the second quantum circuit representing the action of the time evolution operator for the second time period.

# FIG.1

# FIG.2

# FIG.3

# FIG.4

# FIG.5

```
          500                                                    100
       STORAGE
        UNIT

        501              502              503              505
     OBTAINING      FIRST            SECOND           OUTPUT
       UNIT         GENERATING       GENERATING        UNIT
                     UNIT            UNIT

                                      504
                                CALCULATING
                                   UNIT
```

# FIG.6

$$d_{\text{trot}} \gg d \qquad 600$$

$$\tilde{L}_1 \quad U_{\text{trot}}^{(\tilde{L}_1)} \approx \exp\!\left(-i\tau H^{(\tilde{L}_1)}\right)$$

OPTIMIZATION

610

$$d$$

$$\theta_1^* \quad V^{(\tilde{L}_1)}(\theta_1^*) \approx \exp\!\left(-i\tau H^{(\tilde{L}_1)}\right)$$

# FIG.7

$$\left(V^{(\tilde{L}_2)}(\theta_1^*)\right)^2 \approx \exp\left(-i2\tau H^{(\tilde{L}_2)}\right)$$

OPTIMIZATION

$$V^{(\tilde{L}_2)}(\theta_2^*) \approx \exp\left(-i2\tau H^{(\tilde{L}_2)}\right)$$

# FIG.8

$$V^{(\tilde{L}_3)}(\theta_1^*)V^{(\tilde{L}_3)}(\theta_2^*) \approx \exp\left(-i3\tau H^{(\tilde{L}_3)}\right)$$

OPTIMIZATION

$$V^{(\tilde{L}_3)}(\theta_3^*) \approx \exp\left(-i3\tau H^{(\tilde{L}_3)}\right)$$

# FIG.9

$$\tilde{L} = \nu_{LR}\tau + \tilde{L}_0$$

# FIG.10

# FIG.11

1100

$$d_{\mathrm{trot}} \gg d$$

$$\tilde{L}_1 \quad U_{\mathrm{trot}}^{(\tilde{L}_1)} \approx \exp\!\left(-i\tau H^{(\tilde{L}_1)}\right)$$

1110

$$d$$

$$\theta_1^* \quad V^{(\tilde{L}_1)}(\theta_1^*) \approx \exp\!\left(-i\tau H^{(\tilde{L}_1)}\right)$$

# FIG.12

1200

$$d \quad d$$

$$\tilde{L}_2 \quad \theta_1^* \quad \theta_1^* \quad \left(V^{(\tilde{L}_2)}(\theta_1^*)\right)^2 \approx \exp\!\left(-i2\tau H^{(\tilde{L}_2)}\right)$$

1201   1201

1210

$$d$$

$$\theta_2^* \quad V^{(\tilde{L}_2)}(\theta_2^*) \approx \exp\!\left(-i2\tau H^{(\tilde{L}_2)}\right)$$

# FIG.13

$$\left(V^{(\tilde{L}_3)}(\theta_2^*)\right)^2 \approx \exp\left(-i4\tau H^{(\tilde{L}_3)}\right)$$

$$V^{(\tilde{L}_3)}(\theta_3^*) \approx \exp\left(-i4\tau H^{(\tilde{L}_3)}\right)$$

# FIG.14

1400

ETS(K=4;$\{\tau_j\}=\{\tau,2\tau,3\tau,4\tau\}$)

1401

$\tau$

TIME

| | $\approx\exp(-i\tau H)$ |
| --- | --- |
| $\approx\exp(-i2\tau H)$ |
| $\approx\exp(-i3\tau H)$ |
| $\approx\exp(-i4\tau H)$ |

# FIG.15

1500

BTS(K=3;$\{\tau_j\}=\{\tau,2\tau,4\tau\}$)

1501

$\tau$

TIME

$\vdash\cdot\rightarrow$    $\approx\exp(-i\tau H)$

$\vdash\dashrightarrow$    $\approx\exp(-i2\tau H)$

$\vdash\longrightarrow$ $\approx\exp(-i4\tau H)$

# FIG.16

1600

# FIG.17

# FIG.18

# FIG.19

1900

# FIG.20

2000

# FIG.21

2100

$\tilde{L} \leq 12, \tau \in [0.10, 0.40], d = 3$

Legend:
- ----O---- Repeated
- —□— Binary (K=3)
- --△-- Equidistant (K=4)

# FIG.22

# FIG.23

2300

$$\tilde{L}_1 \left| \boxed{U_{\text{trot}}^{(\tilde{L}_1)}(\tau)} \right| \approx \exp\left(-i\tau H^{(\tilde{L}_1)}\right) \xrightarrow{\text{OPTIMIZATION}} \boxed{\theta_1^*}$$

$d_{\text{trot}}$

2310

$d$

2320

2321 2321

$$\tilde{L}_2 \left| \boxed{U_{\text{trot}}^{(\tilde{L}_2)}(\tau)} \right| \boxed{U_{\text{trot}}^{(\tilde{L}_2)}(\tau)} \right| \xrightarrow{\text{OPTIMIZATION}} \boxed{\theta_2^*}$$

2330

$d$

2340

2341 2341 2341

$$\tilde{L}_3 \left| \boxed{U_{\text{trot}}^{(\tilde{L}_3)}(\tau)} \right| \boxed{U_{\text{trot}}^{(\tilde{L}_3)}(\tau)} \right| \boxed{U_{\text{trot}}^{(\tilde{L}_3)}(\tau)} \right| \xrightarrow{\text{OPTIMIZATION}} \boxed{\theta_3^*}$$

2350

$d$

# FIG.24

2400

CPU MEASUREMENT TIME

Legend:
- ─○─ Parallel optimization
- ─□─ Sequential optimization

Axes: X-axis COMPILATION SIZE (9, 10, 11, 12); Y-axis CPU RUNTIME [HOURS] (0, 20, 40, 60, 80, 100)

# FIG.25

2500

DEPTH OF TARGET CIRCUIT

# FIG.26

# FIG.27

2700

# FIG.28

START

S2801
OBTAIN $H^{(L)}$, $\tau$, AND $V^{(L)}(\theta)$

S2802
DETERMINE K AND $\{\tilde{L}_j\}$

S2803
SET TROTTER CIRCUIT AS TARGET CIRCUIT AND OPTIMIZE $V^{(\tilde{L}_1)}(\theta_1)$

S2804
SET J TO 2

S2805
SET $V^{(\tilde{L}_j)}(\theta^*_{(j-1)}) V^{(\tilde{L}_j)}(\theta^*_1)$ EXPANDED TO SIZE $\tilde{L}_j$ AS TARGET CIRCUIT, AND OPTIMIZE $V^{(\tilde{L}_j)}(\theta_j)$

S2806
$j \geq K$?

NO

YES

S2808
OUTPUT $\{\theta^*_j\}$

S2807
INCREMENT j

END

# FIG.29

```
                    ┌─────────────────┐
                    │      START      │
                    └─────────────────┘
                             │
                             ▼                    ⌐S2901
              ┌──────────────────────────────────┐
              │  OBTAIN {θ*ⱼ}, N, AND |ψ>         │
              └──────────────────────────────────┘
                             │
                             ▼                    ⌐S2902
              ┌──────────────────────────────────┐
              │           SET k TO 1             │
              └──────────────────────────────────┘
                             │
                             ▼                    ⌐S2903
              ┌──────────────────────────────────┐
              │  APPLY V⁽ᴸ⁾(θ*ₙ)(V⁽ᴸ⁾(θ*ₖ))ᵐ TO │
              │  |ψ>, WHERE n=(k)mod (K) AND      │
              │            m=[k/K]                │
              └──────────────────────────────────┘
                             │
                             ▼                    ⌐S2904
              ┌──────────────────────────────────┐
              │  MEASURE EXPECTED VALUE OF        │
              │       PHYSICAL QUANTITY          │
              └──────────────────────────────────┘
```

$$\text{APPLY } V^{(L)}(\theta^*_n)(V^{(L)}(\theta^*_K))^m \text{ TO } |\psi\rangle, \text{ WHERE } n=(k)\,\mathrm{mod}\,(K) \text{ AND } m=[k/K]$$

- S2901: OBTAIN $\{\theta^*_j\}$, N, AND $|\psi\rangle$
- S2902: SET k TO 1
- S2903: APPLY $V^{(L)}(\theta^*_n)(V^{(L)}(\theta^*_K))^m$ TO $|\psi\rangle$, WHERE $n=(k)\bmod(K)$ AND $m=[k/K]$
- S2904: MEASURE EXPECTED VALUE OF PHYSICAL QUANTITY
- S2905: $k \geq K$?  — NO → S2906: INCREMENT k (loop back to S2903); YES → END

# FIG.30

START

S3001
OBTAIN $H^{(L)}$, т, AND $V^{(L)}(\theta)$

S3002
DETERMINE K AND $\{\tilde{L}_j\}$, BASED ON $H^{(L)}$, т

S3003
SET TROTTER CIRCUIT AS TARGET CIRCUIT AND OPTIMIZE $V^{(\tilde{L}_1)}(\theta_1)$

S3004
SET J TO 2

S3005
SET $(V^{(\tilde{L}_j)}(\theta^*_{(j-1)}))^2$ EXPANDED TO SIZE $\tilde{L}_j$ AS TARGET CIRCUIT, AND OPTIMIZE $V^{(\tilde{L}_j)}(\theta_j)$

S3006
$j \geq K$?

NO

YES

S3008
OUTPUT $\{\theta^*_j\}$

S3007
INCREMENT j

END

# FIG.31

START

S3101

OBTAIN $\{\theta^*_j\}$, N, AND $|\psi>$

S3102

SET k TO 1

S3103

DECOMPOSE
$k=\Sigma^K_{(j=1)}((n_j)(2^{(j-1)}))$, WHERE
$n_j=[(N-\Sigma^K_{(l>j)}((n_l)(2^{(l-1)})))/(2^{(j-1)})]$

S3104

APPLY $\Pi^K_{(j=1)}(V^{(L)}(\theta^*_j))^{(n_j)}$
TO $|\psi>$

S3105

MEASURE EXPECTED VALUE OF
PHYSICAL QUANTITY

S3106

$k \geq K$?  NO

YES

S3107

INCREMENT k

END

Europäisches
Patentamt

European
Patent Office

Office européen
des brevets

## EUROPEAN SEARCH REPORT

**Application Number**

EP 25 21 3224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KANASUGI, SHOTA: "Subspace-Based Local Compilation of Variational Quantum Circuits for Large-Scale Quantum Many-Body Simulation", ARXIV PREPRINT ARXIV:2407, vol. 14163, 19 July 2024 (2024-07-19), XP091827042, * abstract * * figure 1 * * section II * | 1-14 | INV. G06N10/20 |
| A | CONOR MC KEEVER ET AL: "Classically optimized Hamiltonian simulation", ARXIV.ORG CORNELL UNIVERSITY LIBRARY, 201 OLIN LIBRARY CORNELL UNIVERSITY ITHACA, NY 14853, 2 June 2023 (2023-06-02), XP091526658, DOI: 10.1103/PHYSREVRESEARCH.5.023146 * abstract * * section II * | 6 | |

**TECHNICAL FIELDS SEARCHED (IPC)**

G06N

The present search report has been drawn up for all claims

| Place of search | Date of completion of the search | Examiner |
|---|---|---|
| The Hague | 16 March 2026 | Theissing, Simon |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022538721 W
- US 2023535109 W
- US 20200143280
- US 20220207402

**Non-patent literature cited in the description**

- **MIZUTA ; KAORU et al.** Local variational quantum compilation of large-scale Hamiltonian dynamics. *PRX Quantum*, 2022, vol. 3 (4)
- **KANASUGI ; SHOTA et al.** Subspace-Based Local Compilation of Variational Quantum Circuits for Large-Scale Quantum Many-Body Simulation. *arXiv preprint arXiv:2407.14163*, 2024